(19) Europäisches Patentamt
European Patent Office
Office européen des brevets

(11) EP 2 816 733 B1

(12) EUROPEAN PATENT SPECIFICATION

(45) Date of publication and mention
of the grant of the patent:
**12.09.2018 Bulletin 2018/37**

(51) Int Cl.:
***H04B 1/48*** *(2006.01)*

(21) Application number: **14171428.7**

(22) Date of filing: **06.06.2014**

(54) **Transmit-receive switching device and high frequency switch**

Sende-Empfangs-Umschaltungsvorrichtung und Hochfrequenzschalter

Dispositif de commutation d'émission-réception et commutateur à haute fréquence

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.06.2013 JP 2013120472**
**07.06.2013 JP 2013120476**

(43) Date of publication of application:
**24.12.2014 Bulletin 2014/52**

(73) Proprietor: **Panasonic Corporation**
**Kadoma-shi**
**Osaka 571-8501 (JP)**

(72) Inventors:
• **Omoto, Yukihiro**
**Chuo-ku, Osaka 540-6207 (JP)**

• **Horiike, Yoshio**
**Chuo-ku, Osaka 540-6207 (JP)**

(74) Representative: **Grünecker Patent- und**
**Rechtsanwälte**
**PartG mbB**
**Leopoldstraße 4**
**80802 München (DE)**

(56) References cited:
**EP-A2- 0 446 050       WO-A1-2004/015881**
**DE-A1- 10 305 361     GB-A- 2 139 835**
**GB-A- 2 335 116        GB-A- 2 365 268**
**JP-A- H0 722 935       US-A- 5 054 114**
**US-A- 5 789 995        US-A1- 2007 035 362**
**US-A1- 2008 186 745  US-A1- 2011 163 792**

**Description**

[TECHNICAL FIELD]

The present invention relates to a transmission/reception switching device and a high frequency switch for switching between connecting a transmission circuit to an antenna and connecting a reception circuit to the antenna.

[BACKGROUND ART]

In a transmission/reception circuit which achieves transmission/reception of a wireless signal with a single antenna, a transmission/reception switching device is employed which switches between transmission and reception so that the antenna is connected to a transmission circuit during transmission and that the antenna is connected to a reception circuit during reception.

Not only is a transmission/reception switching device required to be inexpensive and small, but, in the case of a battery-driven transmission/reception circuit, it is also required to be highly efficient especially during transmission, from the standpoint of battery life. Therefore, the insertion loss of a transmission/reception switching device is expected to be low.

Furthermore, strict law regulations are implemented in Europe against spurious emission, and thus a transmission/reception switching device with little distortion is needed.

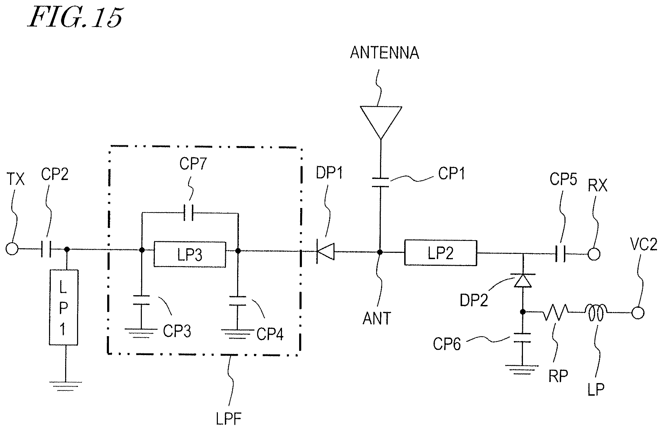

Hereinafter, with reference to the drawings, a conventional transmission/reception switching device will be described. FIG. **15** is a diagram showing a transmission/reception switching device described in **reference** JP 2002-64400 (A)**. A similar device is also disclosed in** US 5,054,114**.**

This transmission/reception switching device includes two diodes **DP1** and **DP2** and two line paths **LP1** and **LP2**.

Via a DC cutting capacitor **CP1,** the antenna is connected to an antenna terminal **ANT** of the transmission/reception switching device.

The diode **DP1** has its anode connected to the antenna terminal **ANT,** and its cathode connected to a transmission terminal **TX** and the line path **LP1** connected to GND. Furthermore, the line path **LP2** is connected between the antenna terminal **ANT** and a reception terminal **RX.**

The diode **DP2** has its cathode connected to the reception terminal **RX** via a capacitor **CP5** and to the line path **LP2,** and its anode connected to GND via a capacitor **CP6**. Furthermore, between the anode of the diode **DP2** and the capacitor **CP6,** a terminal **VC2** of a control circuit is connected via a resistor **RP** and an inductor **LP.**

When a voltage (e.g., +3 V or +2.6 V) is applied to the terminal **VC2** of the control circuit, the two diodes **DP1** and **DP2** are turned ON, so that the transmission terminal **TX** and the antenna terminal **ANT** become connected. On the other hand, when no voltage is applied to the terminal **VC2** of the control circuit, the antenna terminal **ANT** and the reception terminal **RX** are connected. Thus, a single antenna can be used for both transmission and reception.

Note that the inductor **LP** connected to the terminal **VC2** of the control circuit acts to increase impedance on the source power side, thus reducing fluctuations in the source-power side impedance even when the source power undergoes fluctuations due to load fluctuations or the like. Thus, it functions to avoid the influence of power fluctuations.

During transmission, a plus voltage is applied to the terminal **VC2** of the control circuit. At this time, a current flows from the terminal **VC2** of the control circuit to the inductor **LP,** the resistor **RP,** the diode **DP2,** the line path **LP2,** the diode **DP1,** the line path **LP3,** the line path **LP1,** and GND, in this order.

With this, a state of low impedance occurs between the anode terminal and the cathode terminal of the diode **DP1** and between the anode terminal and the cathode terminal of the diode **DP2**. Then, the line path **LP2** connected to the anode terminal of the diode **DP1** becomes grounded (connected to GND) via the diode **DP2** and the capacitor **CP6,** whereby the line path **LP2** functions as a so-called λ/4 circuit.

As a result, impedance increases at the line path **LP2** connected to the antenna terminal **ANT.** As a result, a transmission signal which is input from the transmission terminal **TX** is output from the antenna, via the diode **DP1.**

On the other hand, during reception, no voltage is applied to the terminal **VC2** of the control circuit. No current flows in this case, so that impedance increases at the diode **DP1** connected to the antenna terminal **ANT.** As a result, a reception signal which is input from the antenna is input to the reception terminal **RX** via the line path **LP2** and the capacitor **CP5.**

However, the transmission/reception switching described in JP 2002-64400 (A) has a problem in that the diode **DP1** may cause power loss during transmission, thus lowering the battery life.

Moreover, in the transmission/reception switching device described in JP 2002-64400 (A)**,** during transmission at large power, harmonic spurious emission will increase due to nonlinearity of the diodes. In particular, when a transmission frequency of 169 MHz is adopted in Europe, their radio law stipulates that the third harmonic must be maintained at an emission power of -54dBm or lower, and therefore the aforementioned spurious emission associated with diode nonlinearity will be a problem.

The present invention has been made in view of the aforementioned problems of conventional techniques, and provides a transmission/reception switching device which can suppress power loss during transmission and reduce deterioration of battery life. The present invention also provides a high frequency switch which suppresses harmonic spurious emission and allows for transmission power efficiency with a simple construction.

This is achieved by the features of the independent claim. Preferred embodiments are the subject matter of dependent claims.

With a transmission/reception switching device according to one embodiment of the present invention, it is possible to suppress power loss during transmission and reduce deterioration of battery life. Moreover, it is possible to suppress decay of a reception signal which is received with an antenna, and output it at a reception terminal. With a high frequency switch according to one embodiment of the present invention, it is possible to suppress harmonic spurious emission and allow for transmission power efficiency with a simple construction.

[BRIEF DESCRIPTION OF DRAWINGS]

[FIG. 1] A diagram showing a transmission/reception switching device according to an embodiment of the present invention.

[FIG. 2] A diagram showing a transmission/reception switching device in which a high frequency switch according to an embodiment of the present invention is used.

[FIG. 3A] A diagram showing a second reactance according to an embodiment of the present invention.

[FIG. 3B] A diagram showing a second reactance according to an embodiment of the present invention.

[FIG. 3C] A diagram showing a second reactance according to an embodiment of the present invention.

[FIG. 3D] A diagram showing a second reactance according to an embodiment of the present invention.

[FIG. 3E] A diagram showing a second reactance according to an embodiment of the present invention.

[FIG. 3F] A diagram showing a second reactance according to an embodiment of the present invention.

[FIG. 3G] A diagram showing a second reactance according to an embodiment of the present invention.

[FIG. 4] A diagram showing a transmission/reception switching device in which a high frequency switch according to an embodiment of the present invention is used.

[FIG. 5] A diagram showing simulation results of temporal change in Vb.Vt and Ib.It of a transmission/reception switching device according to an embodiment of the present invention.

[FIG. 6] A diagram showing a high frequency switch according to an embodiment of the present invention.

[FIG. 7] A diagram showing simulation results of temporal change in Vb.Vt and Ib.It of a transmission/reception switching device in which a high frequency switch according to an embodiment of the present invention is used.

[FIG. 8] A diagram showing a high frequency switch according to an embodiment of the present invention.

[FIG. 9] A diagram showing simulation results of temporal change in Vb.Vt and Ib.It of a transmission/reception switching device in which a high frequency switch according to an embodiment of the present invention is used.

[FIG. 10] A diagram showing a high frequency switch according to an embodiment of the present invention.

[FIG. 11] A diagram showing an operation of a high frequency switch according to an embodiment of the present invention.

[FIG. 12] A diagram showing a transmission/reception switching device in which high frequency switches according to an embodiment of the present invention are used.

[FIG. 13] A diagram showing a transmission/reception switching device in which high frequency switches according to an embodiment of the present invention are used.

[FIG. 14] A diagram showing a transmission/reception switching device in which high frequency switches according to an embodiment of the present invention are used.

[FIG. 15] A diagram showing a conventional transmission/reception switching device.

[DESCRIPTION OF EMBODIMENTS]

A transmission/reception switching device according to one embodiment of the present invention comprises: a first reactance including a first inductor and a first capacitor, the first reactance being connected between an antenna and a transmission section which outputs a signal; a second reactance including a second inductor and a second capacitor, the second reactance being connected between a predetermined node and a reception terminal; and a high frequency switch connected to an output end of one of the first inductor and the first capacitor at the predetermined node, constants of the second inductor and the second capacitor having values for establishing matching under influence of a mismatch caused by the first reactance during signal reception.

Thus, it is possible to suppress power loss during transmission and reduce deterioration of battery life. Moreover, it is possible to suppress decay of a reception signal which is received with an antenna, and output it at a reception terminal.

In one embodiment, the constants of the second inductor and the second capacitor may have values for cancelling out a reactance component of the first reactance during signal reception.

Thus, it is possible to suppress power loss during transmission and reduce deterioration of battery life. Moreover, it is possible to suppress decay of a reception signal which is received with an antenna, and output it at a reception terminal.

In one embodiment, the first reactance may further include an impedance conversion section for converting an output impedance of the transmission section into a first impedance, and further converting the first impedance into a second impedance.

By allowing some of the reactance in the impedance conversion section to be at the predetermined node, the number of parts can be reduced.

In one embodiment, the high frequency switch may include a semiconductor switch having one end connected directly or via a reactance element to GND and another end connected to the output end of one of the first inductor and the first capacitor at the predetermined node; and the high frequency switch may switch ON during transmission in which the signal output from the transmission section is transmitted from the antenna, and switch OFF during reception in which a signal received at the antenna is output to the reception terminal.

Thus, it is possible to suppress power loss during transmission and reduce deterioration of battery life. Moreover, it is possible to suppress decay of a reception signal which is received with an antenna, and output it at a reception terminal.

In one embodiment, the high frequency switch may include a first semiconductor switch and a second semiconductor switch; one end of the first semiconductor switch and one end of the second semiconductor switch may be connected in series at the predetermined node; and another end of the first semiconductor switch and another end of the second semiconductor switch may be each connected to GND directly or via a reactance element.

Thus, it is possible to correct for nonlinearity of the semiconductor switches, and suppress spurious emission.

In one embodiment, the other end of the first semiconductor switch may be connected to a power terminal; and the high frequency switch may switch ON when a plus voltage is applied to the power terminal during transmission in which the signal output from the transmission section is transmitted from the antenna, and switch OFF when zero voltage is applied to the power terminal during reception in which a signal received at the antenna is output to the reception terminal.

This makes unnecessary a diode for switching between transmission/reception to be connected between the transmission section and the antenna, thereby allowing to suppress power loss during transmission. Moreover, switching between transmission and reception is enabled by controlling the voltage applied to the high frequency switch.

In one embodiment, a cathode of a first diode being the first semiconductor switch and an anode of a second diode being the second semiconductor switch may be connected in series at the predetermined node; an anode of the first diode and a cathode of the second diode may be each connected to GND directly or via the reactance element; the anode of the first diode may be connected to the power terminal; and the high frequency switch may switch ON when a plus voltage is applied to the power terminal in order to flow a forward current through the first diode and the second diode during the transmission, and switch OFF when zero voltage is applied to the power terminal in order not to flow a forward current through the first diode and the second diode during the reception.

As a result, diode nonlinearity can be corrected for, and spurious emission can be suppressed.

In one embodiment, a drain of a P-MOSFET being the first semiconductor switch and a drain of an N-MOSFET being the second semiconductor switch may be connected in series at the predetermined node; a source of the P-MOSFET and a source of the N-MOSFET may be each connected to GND directly or via the reactance element; and the high frequency switch may switch ON by allowing the P-MOSFET to conduct between the drain and the source and allowing the N-MOSFET to conduct between the drain and the source during transmission in which the signal output from the transmission section is transmitted from the antenna, and switch OFF by not allowing the P-MOSFET to conduct between the drain and the source, and not allowing the N-MOSFET to conduct between the drain and the source during reception in which a signal received at the antenna is output to the reception terminal.

Since the P-MOSFET turns ON when the N-MOSFET is OFF, and the N-MOSFET turns ON when the P-MOSFET is OFF, nonlinearity can be corrected for, and spurious emission can be suppressed.

In one embodiment, a collector of a PNP transistor being the first semiconductor switch and a collector of an NPN transistor being the second semiconductor switch may be connected in series at the predetermined node; an emitter of the PNP transistor and an emitter of the NPN transistor may be each connected to GND via the reactance element; and the high frequency switch may switch ON by flowing a base current through each of a base of the PNP transistor and a base of the NPN transistor during transmission in which the signal output from the transmission section is transmitted from the antenna, and switch OFF by not flowing a base current through each of the base of the PNP transistor and the base of the NPN transistor during reception in which a signal received at the antenna is output to the reception terminal.

Since the PNP transistor turns ON when the NPN transistor is OFF, and the NPN transistor turns ON when the PNP transistor is OFF, nonlinearity can be corrected for, and spurious emission can be suppressed.

A high frequency switch according to one embodiment of the present invention comprises: a first diode and a second diode; and a plurality of bias elements for flowing a bias current through the first diode and the second diode, the plurality of bias elements being respectively connected to an anode of the first diode and a cathode of the second diode, wherein, when the bias current is flowed, a state of conducting is established between a first connection end and a second connection end, the first connection end being a node between a cathode of the first diode and an anode of the second diode, and the second connection end being a node at which the anode of the first diode and the cathode of the second diode are connected via a plurality of DC cutting elements.

Thus, it is possible to suppress harmonic spurious emission and allow for transmission power efficiency with a simple construction.

In one embodiment, the plurality of DC cutting elements may be at least two capacitors connected in series with each other; and the second connection end may be a node between the at least two capacitors.

By using two capacitors, the high frequency characteristics of these capacitors can be cancelled out, thereby suppressing spurious emission.

In one embodiment, the plurality of bias elements may be inductors, the inductors also composing a filter for a high frequency signal to pass through the first connection end and the second connection end.

By adopting parts of a filter as the inductors, it becomes possible to enhance the filter characteristics without increasing the number of parts, thereby attenuating spurious emission.

A transmission/reception switching device according to one embodiment of the present invention comprises a high frequency switch, wherein, a transmission section which outputs a signal is connected to one of the first connection end and the second connection end of the high frequency switch; and an antenna, a reception terminal, and a further high frequency switch are connected to the other of the first connection end and the second connection end.

By applying the above high frequency switch to a transmission/reception switching device, it becomes possible to suppress harmonic spurious emission and allow for transmission power efficiency with a simple construction.

In one embodiment, during transmission in which a signal output from the transmission section is transmitted from the antenna, the bias current may be flowed in order to establish a conducting state between the first connection end and the second connection end, and, during reception in which a signal received at the antenna is output to the reception terminal, the bias current may not be flowed in order to establish a non-conducting state between the first connection end and the second connection end.

By applying the above high frequency switch to a transmission/reception switching device, it becomes possible to suppress harmonic spurious emission and allow for transmission power efficiency with a simple construction.

Hereinafter, embodiments of the present invention will be described with reference to the drawings. It will be appreciated by those skilled in the art that the present invention is not limited to these embodiments, but is expressible with like terms or like description in similar fields.

(Embodiment 1)

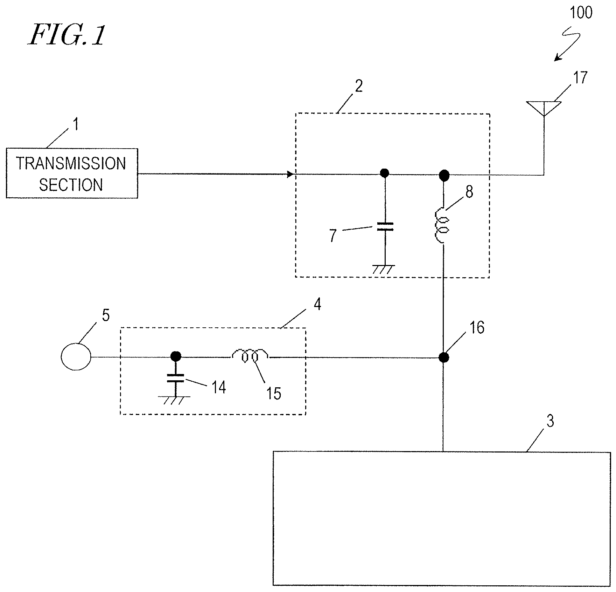

FIG. **1** shows a fundamental construction of a transmission/reception switching device according to an embodiment of the present invention.

The transmission/reception switching device **100** shown in FIG. **1** includes: a first reactance **2** including an inductor **8** and a capacitor **7,** the first reactance **2** being connected between a transmission section **1** that outputs a signal and an antenna **17;** a second reactance **4** including an inductor **15** and a capacitor **14** whose respective constants are determined so that matching is attained under influence of a mismatch caused by the first reactance **2** during reception, the second reactance **4** being connected between a node **16** and a reception terminal **5;** and a high frequency switch **3** connected at the node **16** to an output end of the inductor **8** or the capacitor **7.**

With the transmission/reception switching device **100,** it is possible to suppress power loss during transmission and reduce deterioration of battery life.

Although FIG. **1** illustrates that the inductor **8** is connected to the node **16,** the first inductor **8** and the first capacitor **7** may be swapped so that the inductor **8** is connected to GND and that the capacitor **7** is connected to the node **16,** whereby similar effects can also be obtained.

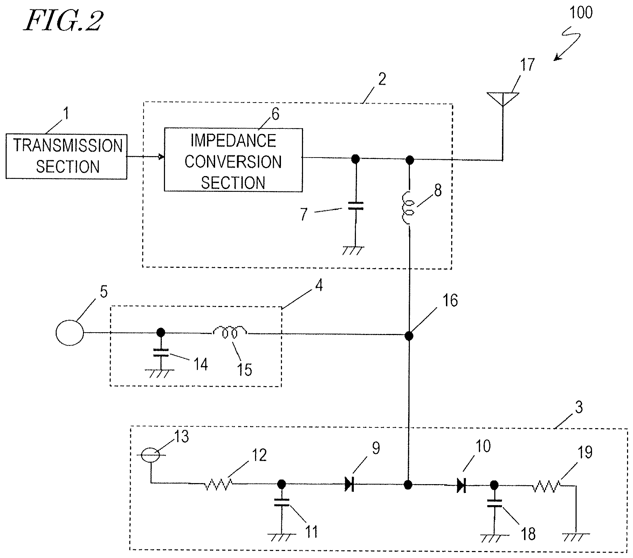

FIG. **2** shows an example of a transmission/reception switching device in which a high frequency switch according to an embodiment of the present invention is used. The transmission/reception switching device **100** shown in FIG. **2** includes a transmission section **1,** a first reactance **2,** a high frequency switch **3,** a second reactance **4,** a reception terminal **5,** and an antenna **17.**

The first reactance **2** includes an impedance conversion section **6,** a capacitor **7,** and an inductor **8.** The second reactance **4** includes a capacitor **14** and an inductor **15.**

The high frequency switch **3** includes semiconductor switches having one end connected directly or via a reactance element to GND and another end, different from the one end, connected at the node **16** to an output end of the inductor **8** or the capacitor **7.** As a result, a reception signal which is received from the antenna **17** can be output to the reception terminal **5** with its decay being suppressed.

More specifically, the high frequency switch **3** includes a diode **9** as a first semiconductor switch and a diode **10** as a second semiconductor switch. Moreover, in order to flow a DC bias current to the diode **9** and the diode **10,** the high frequency switch **3** includes a resistor **12,** a resistor **19,** and a power terminal **13.** Furthermore, the high frequency switch **3** includes a capacitor **18** for grounding a cathode of the diode **10** to GND with respect to a wireless signal to be transmitted, and a capacitor **11** for grounding an anode of the diode **9** to GND with respect to a wireless signal to be transmitted.

The high frequency switch **3,** the first reactance **2,** and the second reactance **4** are connected at the node **16.**

Moreover, in the high frequency switch **3,** one end of the first semiconductor switch (which herein is the diode **9**) and one end of the second semiconductor switch (which herein is the diode **10**) are connected in series at the node **16,** and another end of the first semiconductor switch (which herein is the diode **9**) and another end of the second semiconductor switch (which herein is the diode **10**) are connected to GND via the reactance element **11** and the reactance element **18.**

With such interconnection, it is possible to correct for nonlinearity of the semiconductor switches, and suppress spurious emission.

Hereinafter, with reference to FIG. **2,** an operation of the transmission/reception switching device **100** according to an embodiment of the present invention will be described.

In FIG. **2,** one end (which herein is an anode) of the first semiconductor switch (which herein is the diode **9**) is connected to the power terminal **13.** During transmission in which a signal being output from the transmission section **1** is transmitted from the antenna **17,** a plus voltage is applied to the power terminal **13** so that the high frequency switch **3** switches ON. During reception in which a signal being received at the antenna **17** is output to the reception terminal **5,** zero voltage is applied to the power terminal **13** so that the high frequency switch **3** switches OFF.

Conventional transmission/reception switching devices would include a diode for switching between transmission/reception that is provided between the transmission section and the antenna. However, the present embodiment does not require any such diode. Therefore, while suppressing power loss during transmission, it is possible to switch between transmission and reception by controlling the voltage to be applied to the high frequency switch **3.**

Next, a transmission operation will be described. During transmission, for example, 3 V is applied to the power terminal **13.** Note that control of the power voltage to be applied to the power terminal **13** is achieved by a microcomputer (not shown), for example.

When the potential of the power terminal **13** reaches 3 V, a DC bias current flows to the diode **9** and the diode **10** via the resistor **12** and the resistor **19.** As a result, a conducting state is established between anode-cathode of the diode **9.** Similarly, a conducting state is also established between anode-cathode of the diode **10.** As a result, the node **16** becomes connected to GND with respect to a wireless signal to be transmitted, by way of the capacitor **11** and the capacitor **18.**

Note that the capacitor **11** and the capacitor **18** need to be set so as to present a sufficiently small impedance relative to the transmission frequency. For example, when the transmission frequency is 169 MHz, the capacitor **11** and the capacitor **18** are set to 1000 pF.

Examples using specific values will be described below.

The transmission section **1** outputs a transmission signal of 169 MHz. In the case of battery driving, the battery voltage is about 3 to about 6 V. Then, the signal source voltage of the transmission section **1** is determined depending on the battery voltage. Specifically, given a load impedance RL, the transmission power Wo from the transmission section **1** is determined from eq. (1) below.

$$\mathrm{Wo} \fallingdotseq \mathrm{Vs}^2/\mathrm{RL} \qquad (1)$$

Herein, Vs is the signal source voltage = the battery voltage. For example, transmitting a signal with a power of 1 W requires that RL=25 $\Omega$, given that Vs=5 V.

The load impedance RL corresponds to the input impedance of the first reactance **2.** In other words, in the above example, the input impedance of the impedance conversion section **6** is set to 25 $\Omega$.

The impedance of the antenna **17** is usually designed to be 50 $\Omega$. Therefore, the impedance conversion section **6** performs an impedance conversion so that, when the 50 $\Omega$ antenna **17** is connected to the output of the impedance conversion section **6,** the input impedance of the impedance conversion section **6** will be 25 $\Omega$.

As described earlier, at 169 MHz, the node **16** is connected to GND with respect to the transmission signal, so that the capacitor **7** and the inductor **8** constitute a parallel resonant circuit. Then, the constant of the capacitor **7** and the constant of the inductor **8** are set so as to achieve a resonant frequency of 169 MHz. A transmission signal will not decay in the parallel resonant circuit, and thus a transmission signal with a frequency of 169 MHz and a transmission power of 1 W will be emitted into space via the antenna **17.**

Although the first reactance **2** is illustrated as including the impedance conversion section **6** in FIG. **2,** the impedance conversion section **6** is unnecessary so long as desired power is obtained when the impedance of the antenna **17** is coupled to the output of the transmission section **1,** and the first reactance **2** can be implemented with the first inductor **8** and the first capacitor **7.**

Next, a reception operation will be described. During reception, no voltage is applied to the power terminal **13.** In other words, a microcomputer may control the power voltage so that the potential difference between the power terminal **13** and GND becomes zero (e.g., the power terminal **13** has a potential of 0 V).

When the potential of the power terminal **13** reaches 0 V, no current flows to the diode **9** and the diode **10,** so that a non-conducting state is established between the anode and cathode of each diode. As a result, at 169 MHz, the node **16** becomes open at the high frequency switch **3** side. This is equivalent to a non-conducting state existing between the node **16** and the high frequency switch **3.**

Thus, a reception signal having a frequency of 169 MHz that is received at the antenna **17** is input to the second reactance **4,** via the inductor **8.** Moreover, the reception signal is also input to the capacitor **7** and the impedance conversion section **6.**

During reception, the transmission section **1** is not operating, so that, as viewed from the impedance conversion section **6,** the transmission section **1** appears to be a parallel circuit of a high resistance and a reactance component. In other words, as viewed from the antenna, the impedance of the impedance conversion section **6** presents a parallel circuit of a high resistance and a reactance component.

Thus, the impedance conversion section **6** has a high resistance. Therefore, by cancelling out the reactance component of the impedance conversion section **6,** power of the reception signal received at the antenna **17** will be prevented from being consumed at the impedance conversion section **6.**

Accordingly, the constant of the inductor **15** and the constant of the capacitor **14** of the second reactance **4** are determined so as to cancel out the reactance component including the impedance conversion section **6,** the capacitor **7,** and the inductor **8.** In other words, by determining the constant of the inductor **15** and the constant of the capacitor **14** so that matching is attained under influence of a mismatch caused by the first reactance **2** during reception, it becomes possible to output the reception signal received from the antenna **17** to the reception terminal **5,** with its decay being suppressed.

Thus, in the transmission/reception switching device **100** according to an embodiment of the present invention, the cathode of the first diode **9** as a first semiconductor switch and the anode of the second diode **10** as a second semiconductor switch are connected in series at the predetermined node **16;** the anode of the first diode **9** and the cathode of the second diode **10** are connected to GND via the reactance elements **11** and **18;** and the anode of the first diode **9** is connected to the power terminal **13.** The high frequency switch **3** switches ON as a plus voltage is applied to the power terminal **13** during transmission to flow a forward current through the first diode **9** and the second diode **10,** or switches OFF as zero voltage is applied to the power terminal **13** during reception so as not to flow a forward current through the first diode **9** and the second diode **10.**

As a result, diode nonlinearity can be corrected for, and spurious emission can be suppressed.

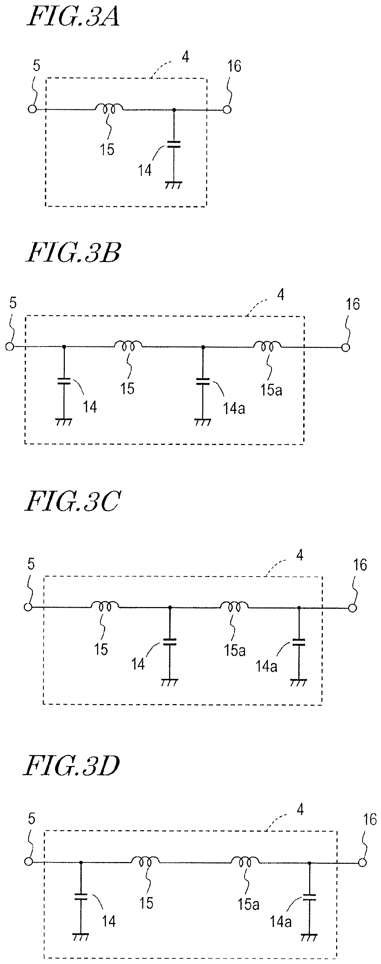

In the second reactance **4** shown in FIG. **2,** the inductor **15** is connected to the node **16,** and the capacitor **14** is connected to the reception terminal **5.** However, as shown in FIG. **3A,** the capacitor **14** may be connected to the node **16,** and the inductor **15** may be connected to the reception terminal **5.** With such interconnection, too, by determining the constant of the inductor **15** and the constant of the capacitor **14** so that matching is attained under influence of a mismatch caused by the first reactance **2** during reception, it becomes possible to output the reception signal received from the antenna **17** to the reception terminal **5,** with its decay being suppressed.

The second reactance **4** can attain effects similar to the above by including at least one inductor and at least one capacitor. FIG. **3B,** FIG. **3C,** and FIG. **3D** are diagrams showing an second reactance **4** which include two inductors **15** and **15a** and two capacitors **14** and **14a.**

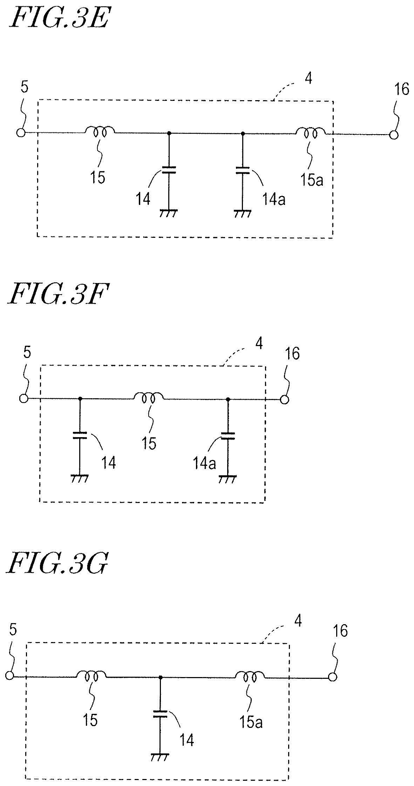

In the example of FIG. **3B,** the node **16,** the inductor **15a,** the capacitor **14a,** the inductor **15,** the capacitor **14,** and the reception terminal **5** are connected in this order. In the example of FIG. **3C,** the node **16,** the capacitor **14a,** the inductor **15a,** the capacitor **14,** the inductor **15,** and the reception terminal **5** are connected in this order. In the example of FIG. **3D,** the node **16,** the capacitor **14a,** the inductor **15a,** the inductor **15,** the capacitor **14,** and the reception terminal **5** are connected in this order. In the FIG. **3E,** the node **16,** the inductor **15a,** the capacitor **14a,** the capacitor **14,** the inductor **15,** and the reception terminal **5** are connected in this order. With such interconnection, too, by determining the constants of the inductors **15** and **15a** and the constants of the capacitors **14** and **14a** so that matching is attained under influence of a mismatch caused by the first reactance **2** during reception, it becomes possible to output the reception signal received from the antenna **17** to the reception terminal **5,** with its decay being suppressed.

FIG. **3F** is a diagram showing a second reactance **4** including one inductor **15** and two capacitors **14** and **14a.** FIG. **3G** is a diagram showing a second reactance **4** including two inductors **15** and **15a** and one capacitor **14.** In the example of FIG. **3F,** the node **16,** the capacitor **14a,** the inductor **15,** the capacitor **14,** and the reception terminal **5** are connected in this order. In the example of FIG. **3G,** the node **16,** the inductor **15a,** the capacitor **14,** the inductor **15,** and the reception terminal **5** are connected in this order. With such interconnection, too, by determining the constants of the inductors **15** and **15a** and the constants of the capacitors **14** and **14a** so that matching is attained under influence of a mismatch caused by the first reactance **2** during reception, it becomes possible to output the reception signal received from the antenna **17** to the reception terminal **5,** with its decay being suppressed.

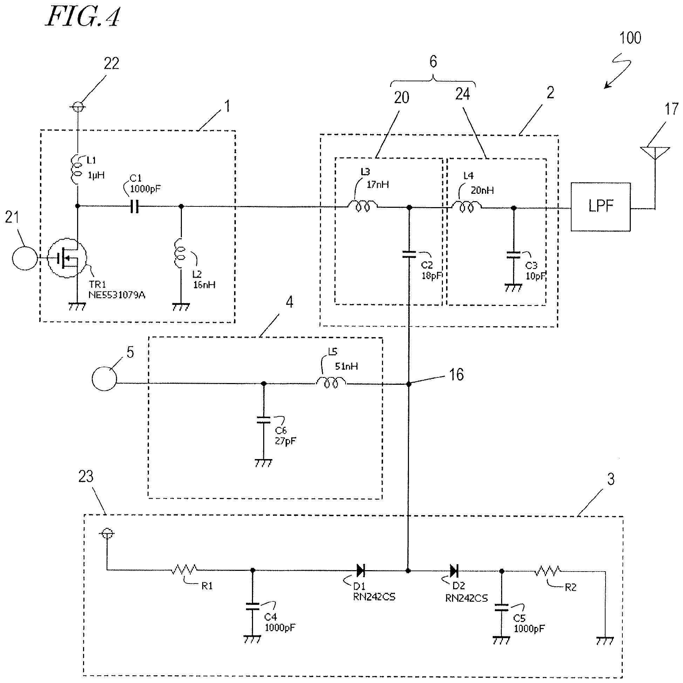

FIG. **4** shows an example of a transmission/reception switching device in which a high frequency switch according to an embodiment of the present invention is used.

In the example shown in FIG. **4,** the transmission section **1** includes an N-MOSFET (Metal-Oxide-Semiconductor Field-Effect Transistor) **TR1** of the product number NE5531079A, a choke coil **L1,** a DC cutting capacitor **C1**, and an inductor **L2**. For example, the choke coil **L1** has 1 $\mu$H, and the inductor **L2** has 16 nH.

During transmission, a voltage of 5 V is applied to a power terminal **22**. During transmission, a transmission signal having a frequency of 169 MHz is input to the transmission terminal **21**. Then, the transistor **TR1,** which is a MOSFET, amplifies the transmission power of the input transmission signal.

In the example of FIG. **4,** the first reactance **2** does not include a capacitor **7** connected in GND and an inductor **8** connected to the node **16,** unlike in FIG. **2**. Therefore, the first reactance **2** shown in FIG. **4** is none other than the impedance conversion section **6** in FIG. **2**.

In this case, the first reactance **2** includes an impedance conversion section **6** which converts the output impedance of the transmission section **1** to a first impedance and which further converts the converted first impedance to a second impedance.

More specifically, the impedance conversion section **6** includes: a first impedance conversion section **20** including an inductor **L3** and a capacitor **C2**; and a second impedance conversion section **24** including an inductor **L4** and a capacitor **C3**. The output end of the first reactance **2** is connected to an antenna **17** via a low-pass filter **LPF.** The capacitor **C2** is connected to the node **16.**

At this time, it is as though a 50 $\Omega$ resistor is connected at the antenna side of the first reactance **2**. Then, the impedance is converted by the inductor **L4** and the capacitor **C3** of the second impedance conversion section **24,** so as to be 38 $\Omega$ at the left end of the inductor **L4**. When converting resistance from 50 $\Omega$ to 38 $\Omega$ in this manner, the constant of the inductor **L4** is set to 20 nH, and the constant of the capacitor **C3** is set to 10 pF.

Then, the impedance is further converted by the inductor **L3** and the capacitor **C2** of the first impedance conversion section **20** so that the resistance equals 25 $\Omega$ at the left end of the inductor **L3**. When converting resistance from 38 $\Omega$ to 25 $\Omega$ in this manner, the constant of the inductor **L3** is set to 17 nH, and the constant of the capacitor **C2** is set to 18 pF.

Thus, the load impedance of the transmission section **1** is 25 $\Omega$, and a transmission signal having a transmission power of 1 W, which is output based on the 5 V voltage being applied at the power terminal **22,** is emitted from the antenna **17** via the first reactance **2.**

During reception, the transmission terminal **21** is fixed at 0 V. This causes the transistor **TR1** to be OFF, thereby resulting in a high impedance. However, some capacitance component is left between the drain of the transistor **TR1** and GND. The inductor **L2** serves to cancel out the capacitance component left between the drain of the transistor **TR1** and GND. With the action of the inductor **L2,** the output of the transmission section **1** is kept open during reception.

Moreover, the high frequency switch **3** is also open as viewed from the node **16**. Therefore, a reception signal which is received at the antenna **17** is converted by the inductor **L4** and the capacitor **C3** into a signal source signal having a resistance of 38 $\Omega$, and the converted signal is input to the second reactance **4** via the capacitor **C2.**

The second reactance **4** includes an inductor **L5** whose constant is 51 nF, and the capacitor **C6** whose constant is 27 pF. The second reactance **4** cancels out the reactance component in the output of the transmission section **1** that was left uncancelled by the capacitor **C1** and the inductor **L2,** and also converts the resistance from 38 $\Omega$ to 50 $\Omega$, and outputs the reception signaled received at the antenna **17** to the reception terminal **5.**

Although the capacitor **C3** is connected to GND and the capacitor **C2** is connected to the node **16** in the example shown in FIG. **4,** the capacitor **C2** may be connected to GND and the capacitor **C3** may be connected to the node **16.**

However, the impedance between the node of the capacitor **C2** and the inductor **L3** and GND is converted by the second impedance conversion section **24** to 38 $\Omega$, as mentioned above. Then, the voltage occurring at the node between the inductor **L3** and the capacitor **C2** is lower than the voltage level occurring between the node of the inductor **L4** and the capacitor **C3** and GND, which means that the voltage level on the node **16** is also low.

Therefore, as an advantage of connecting the capacitor **C2** to the node **16,** no large voltage acts on the high frequency switch **3,** whereby distortion can be further reduced.

Moreover, by connecting one of the reactance elements of the impedance conversion section **6** to the node **16,** it becomes possible to reduce the number of parts as compared to the example shown in FIG. **2.**

Furthermore, not by converting the antenna impedance directly from 50 $\Omega$ to 25 $\Omega$, but rather by converting the impedance from 50 $\Omega$ to 25 $\Omega$ in the two steps as mentioned above, i.e., at the first impedance conversion section **20** and the second impedance conversion section **24,** an enhanced low-pass filter function is provided to attenuate harmonic spurious emission.

In the embodiment of the present invention, during reception, the second reactance **4** allows to cancel out the reactance component remaining in the output of the transmission section **1**. Therefore, it is unnecessary to provide in the transmission path any semiconductor switch (the diode **DP1** in FIG. **15**) which would otherwise be needed to eliminate the influence of the transmission section **1** during reception. As a result, any power loss associated with a semiconductor switch does not occur during transmission, and thus a high efficiency is realized as to transmission power, and battery life degradations can be suppressed.

Moreover, the nonlinear characteristics of diodes will allow greater spurious emission to occur with greater transmission power. In Europe, in particular, the law stipulates that the emission power of the third harmonic (spurious emission) must be kept at -54dBm or less, given a transmission frequency of 169 MHz. Therefore, spurious emission associated with the nonlinear characteristics of diodes presents a significant problem.

In the embodiment of the present invention, as mentioned above, there is no need for a diode **DP1** to be provided in the transmission path, and therefore spurious emission can be suppressed even under a large transmission power.

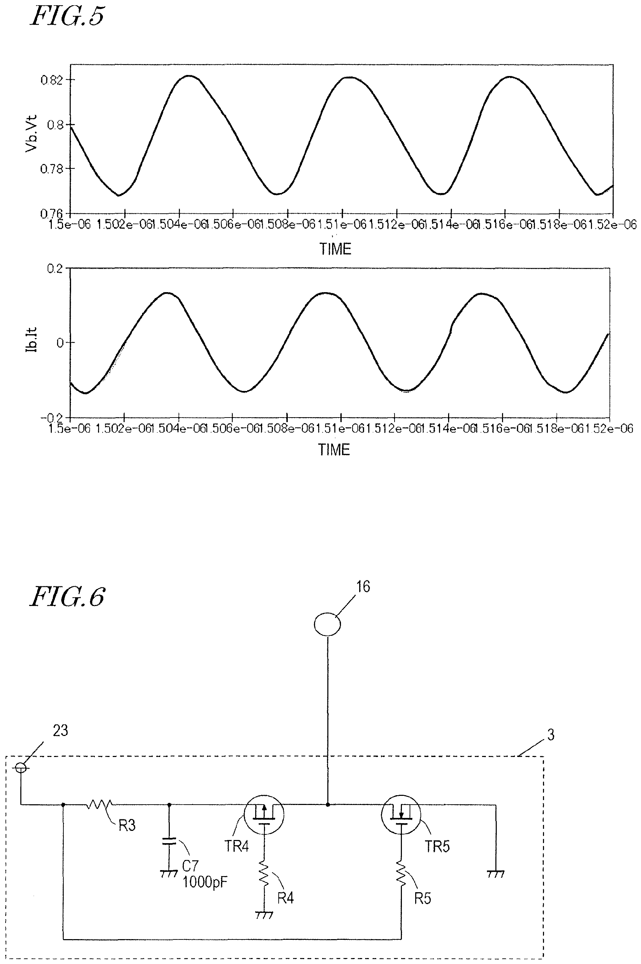

Next, the operation of the transmission/reception switching device shown in FIG. **4** will be further described with reference to FIG. **5**. In FIG. **4,** for example, the diode **D1** and the diode **D2** are PIN diodes of the product number RN242CS, such that R1=R2=600 $\Omega$.

During transmission, a DC bias current flows via the resistors **R1** and **R2**. More specifically, during transmission, a voltage of 3 V is applied at the power terminal **23,** for example. Assuming that the ON voltage of the PIN diode is 0.7 V, the DC bias current flowing through the diodes **D1** and **D2** is about 1.3 mA.

FIG. **5** shows simulation results of temporal change in a voltage Vb.Vt at the node **16** and a current Ib.It flowing through the node **16** in the transmission/reception switching device **100** according to an embodiment of the present invention shown in FIG. **4**. The horizontal axis is the time axis, and the respective vertical axes represent the voltage Vb.Vt at the node **16** and the current Ib.It flowing through the node **16.**

When the node between the capacitor **C2** and the inductor **L3** shifts to a High level, the voltage Vb.Vt at the node **16** increases. Then, the current which flows in an ON state of the diode **D2** increases. On the other hand, the diode **D1** operates in the reverse bias direction.

When the node between the capacitor **C2** and the inductor **L3** shifts to a Low level, the voltage Vb.Vt at the node **16** decreases. Then, the current which flows in an ON state of the diode **D1** increases. On the other hand, the diode **D2** operates in the reverse bias direction.

A diode has a storing effect. The charge of a current which has flowed in the forward bias direction is stored in a diode, and upon change into the reverse bias direction, the stored charge will flow, whereby a current also flows in the reverse bias direction. That is, under a DC bias, a diode operates as if a capacitor.

Therefore, as shown in FIG. **5,** the voltage Vb.Vt and the current Ib.It at the node **16** are essentially orthogonal (i.e., their phases are shifted by essentially 90 degrees). As a result, a product of Vb.Vt and Ib.It is essentially zero, so that essentially no power is consumed by the high frequency switch **3.**

The cathode of the diode **D2** may be directly connected to GND. However, by setting the resistances in the high frequency switch **3** so that R1=R2, and the capacitances of the capacitors so that C4=C5, the impedance at the anode side of the diode **D1** and the impedance at the cathode side of the diode **D2** can be made equal. As a result, the values of currents flowing through the diode **D1** and the diode **D2** become equal, whereby distortions occurring at the diode **D1** and the diode **D2** can be canceled out.

As described above, by connecting the diode **D1** and the diode **D2** in series, a high frequency switch **3** with little loss and little distortion can be realized.

During reception, a microcomputer controls the power terminal **23** to 0 V, so that no DC bias current flows in the diodes **D1** and **D2**. As a result, the diodes **D1** and **D2** are in an OFF state, so that the impedance of the high frequency switch **3** as viewed from the node **16** is open (i.e., there is substantially infinite impedance). As a result, a reception signal received via the antenna **17** is output to the reception terminal **5** via the second reactance **4,** instead of being output from the node **16** to the high frequency switch **3.**

(Embodiment 2)

Hereinafter, another example of the high frequency switch **3** will be described. FIG. **6** shows another example of the high frequency switch **3** according to an embodiment of the present invention.

The example shown in FIG. **6** is an instance where, instead of the diode **D1** and the diode **D2** in FIG. **4,** a transistor **TR4** which is a P-MOSFET and a transistor **TR5** which is an N-MOSFET are used.

Moreover, the high frequency switch **3** shown in FIG. **6** includes two gate bias resistors **R4** and **R5** and a source bias resistor **R3.** Under microcomputer control, a voltage of 3 V is applied to the power terminal **23** during transmission, and a voltage of 0 V during reception.

In the transmission/reception switching device **100** of Embodiment 2, the drain of the P-MOSFET as a first semiconductor switch and the drain of the N-MOSFET as a second semiconductor switch are connected in series at a predetermined node **16,** and a source of the P-MOSFET and a source of the N-MOSFET are connected to GND directly or via a reactance element. The high frequency switch **3** controls a gate voltage of the P-MOSFET so that conduction occurs between the drain and the source of the P-MOSFET during transmission, and also controls a gate voltage of the N-MOSFET so that conduction occurs between the drain and the source of the N-MOSFET; also, the high frequency switch **3** controls the gate voltage of the P-MOSFET so that conduction does not occur between the drain and the source of the P-MOSFET during reception, and controls the gate voltage of the N-MOSFET so that conduction does not occur between the drain and the source of the N-MOSFET.

As a result, the P-MOSFET turns ON when the N-MOSFET is OFF, and the N-MOSFET turns ON when the P-MOSFET is OFF, whereby nonlinearity can be corrected for, and spurious emission can be suppressed.

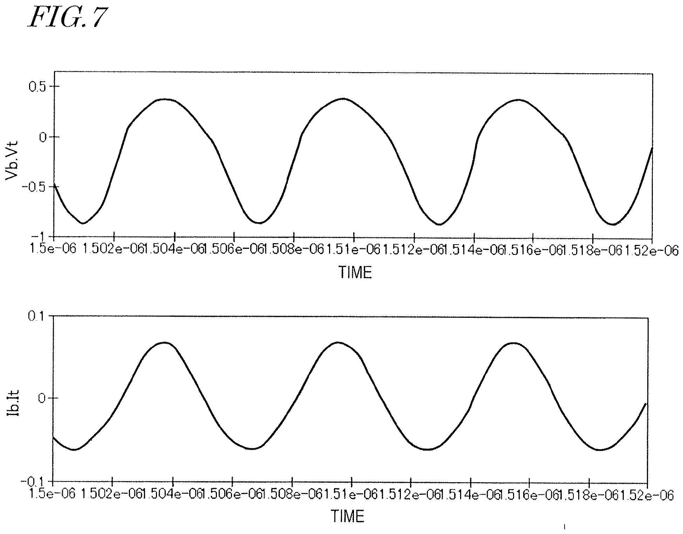

FIG. **7** shows simulation results of temporal change in a voltage Vb.Vt at the node **16** and a current Ib.It flowing through the node **16** in the transmission/reception switching device **100** incorporating the high frequency switch **3** shown in FIG. **6.**

When the node between the capacitor **C2** and the inductor **L3** shifts to a High level, the voltage Vb.Vt at the node **16** increases. Then, the drain current of the transistor **TR5** increases, and the transistor **TR4** becomes OFF.

On the other hand, when the node between the capacitor **C2** and the inductor **L3** shifts to a Low level, the voltage Vb.Vt at the node **16** decreases. Then, the drain current of the transistor **TR4** increases, and the transistor **TR5** becomes OFF.

An FET (Field-Effect Transistor) does not have the storing effect of a diode. Therefore, no current flows when an FET is OFF.

Therefore, when the transistor **TR4** is ON, a capacitor **C7** discharges via the transistor **TR4** (i.e., stored charge flows into the transistor **TR4);** and when the transistor **TR4** is OFF, the capacitor **C7** is charged via the source bias resistor **R3** (i.e., charge is stored). Specifically, in the case of FIG. **6,** a current of about 100 mA flows when the transistor **TR4** is ON.

At this time, decreasing the source bias resistor **R3** to set the DC bias current at about 100 mA will allow a charge-discharge balance to be attained in the capacitor **C7,** but will also increase the loss associated with the bias resistor **R3,** thereby hindering high efficiency.

Accordingly, increasing the source bias resistor **R3** will decrease the DC bias current, whereby the loss associated with the source bias resistor **R3** can be reduced. However, since the charging ability of the capacitor **C7** is degraded, the source voltage of the transistor **TR4** will become lower than the GND level.

This results in some distortion in the voltage waveform Vb.Vt at the node **16,** as shown in FIG. **7.** However, since the current waveform Ib.It is hardly distorted, there is not much harmonic spurious emission during transmission.

Moreover, when the high frequency switch **3** shown in FIG. **6** is used, the voltage Vb.Vt at the node **16** and the current Ib. It are essentially in phase. The power which is consumed between the node **16** and GND is a time integration of a product of the voltage Vb.Vt and the current Ib.It.

The voltage Vb.Vt and the current Ib.It being essentially in phase means that some power will be consumed between the node **16** and GND. In other words, a power loss occurs at the high frequency switch **3.** Then, the generated power is consumed when a current flows through a resistor.

The power loss WL is determined by eq. (2) below.

$$
\begin{aligned}
WL =\ & \text{(square of current flowing through transistor TR4)} \\
& \times \text{(resistance value between drain-source of transistor TR4)} \\
& + \text{(square of current flowing through transistor TR5)} \\
& \times \text{(resistance value between drain-source of transistor TR5)}
\end{aligned}
$$

$$(2)$$

When the transistor **TR4** is OFF, no current flows in the transistor **TR4,** so that no power is consumed at the transistor **TR4.** Similarly, when the transistor **TR5** is OFF, no current flows in the transistor **TR5,** so that no power is consumed at the transistor **TR5.** Therefore, it is when each transistor **TR4, TR5** is ON that any power is consumed.

From the above, it is desirable to use FETs such that the drain-source resistance value is small when the transistor **TR4** and the transistor **TR5** are ON.

(Embodiment 3)

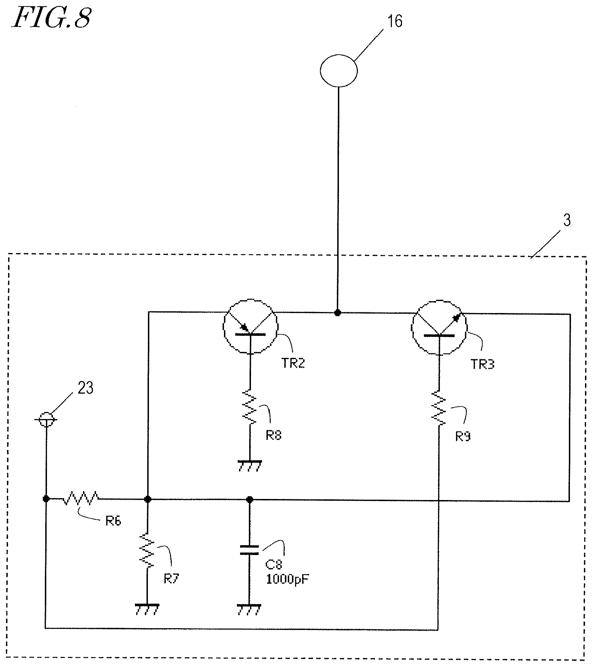

Hereinafter, still another example of the high frequency switch **3** will be described. FIG. **8** shows still another example of the high frequency switch **3.**

The example shown in FIG. **8** is an instance where, instead of the transistor **TR4** and the transistor **TR5** in FIG. **6,** a transistor **TR2** which is a PNP transistor and a transistor **TR3** which is an NPN transistor are used.

Moreover, the high frequency switch **3** shown in FIG. **8** includes two base bias resistors **R8** and **R9,** and resistors **R6** and **R7** for dividing the voltage of the power terminal **23**. The capacitor **C8** is a capacitor for grounding an emitter of the transistor **TR2** and an emitter of the transistor **TR3** to GND with respect to a wireless signal to be transmitted, for which a capacitor having a sufficiently small constant (e.g. 1000 pF) with respect to 169 MHz is used. Under microcomputer control, a voltage of 3 V is applied to the power terminal **23** during transmission, and a voltage of 0 V during reception.

In the transmission/reception switching device **100** of Embodiment 3, a collector of the PNP transistor as a first semiconductor switch and a collector of the NPN transistor as a second semiconductor switch are connected in series at a predetermined node **16,** and the emitter of the PNP transistor and the emitter of the NPN transistor are connected to GND via reactance elements. During transmission, the high frequency switch **3** switches ON as a plus voltage is applied at the power terminal **23** and a base current is flowed through a base of the PNP transistor and a base of the NPN transistor; and during reception, the high frequency switch **3** switches OFF as zero voltage is applied at the power terminal **23** and no base current flows through the base of the PNP transistor and the base of the NPN transistor.

As a result, the PNP transistor becomes ON when the NPN transistor is OFF, and the NPN transistor becomes ON when the PNP transistor is OFF, whereby nonlinearity can be corrected for, and spurious emission can be suppressed.

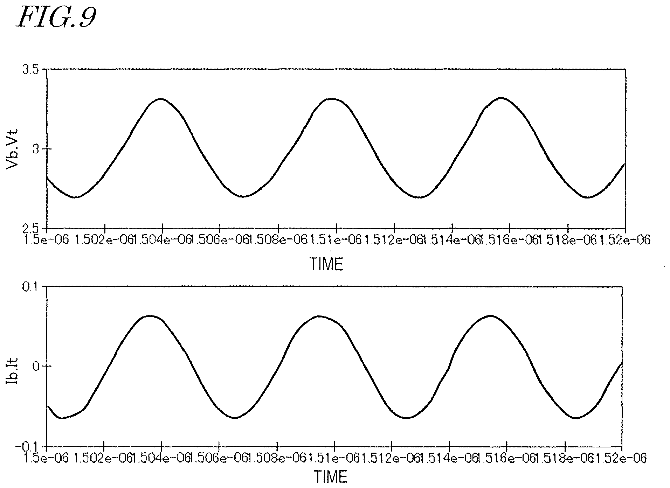

FIG. **9** shows simulation results of temporal change in a voltage Vb.Vt at the node **16** and a current Ib.It flowing through the node **16** in a transmission/reception switching device incorporating the high frequency switch **3** shown in FIG. **8.**

When the node between the capacitor **C2** and the inductor **L3** shifts to a High level, the voltage Vb.Vt at the node **16** increases. Then, the collector current of the transistor **TR3** increases, and the transistor **TR2** becomes OFF.

On the other hand, when the node between the capacitor **C2** and the inductor **L3** shifts to a Low level, the voltage Vb.Vt at the node **16** decreases. Then, the collector current of the transistor **TR2** increases, and the transistor **TR3** becomes OFF.

A transistor does not have the storing effect of a diode. Therefore, no current flows when a transistor is OFF.

Therefore, when the transistor **TR2** is ON, the capacitor **C8** discharges via the transistor **TR2** (i.e., stored charge flows into the transistor **TR2**); and when the transistor **TR3** is ON, the capacitor **C8** is charged via the transistor **TR3** (i.e., charge is stored).

Thus, a balance is attained between the charge current and the discharge current at the capacitor **C8.** As shown in FIG. **9,** distortion does not occur in the voltage waveform Vb.Vt at the node **16** or the current waveform Ib. It at the node **16**. Therefore, harmonic spurious emission during transmission is suppressed.

Moreover, when the high frequency switch **3** shown in FIG. **8** is used, the power consumed between the node **16** and GND is a time integration of a product of the voltage Vb.Vt and the current Ib.It.

Therefore, the voltage Vb.Vt and the current Ib.It being essentially in phase means that some power will be consumed between the node **16** and GND. In other words, a power loss occurs at the high frequency switch **3.** Then, the generated power is consumed when a current flows through a resistor.

The power loss WL is determined by eq. (3) below.

$$\mathrm{WL} = \text{(square of current flowing through transistor TR2)}$$

$$\times \text{(resistance value between collector-emitter of transistor TR2)}$$

$$+ \text{(square of current flowing through transistor TR3)}$$

$$\times \text{(resistance value between collector-emitter of transistor TR3)}$$

$$(3)$$

When the transistor **TR2** is OFF, no current flows in the transistor **TR2,** so that no power is consumed at the transistor **TR2.** Similarly, when the transistor **TR3** is OFF, no current flows in the transistor **TR3,** so that no power is consumed at the transistor **TR3.** Therefore, it is when each transistor **TR2, TR3** is ON that any power is consumed. From the above, it is desirable to use transistors such that the collector-emitter resistance value is small when the transistor **TR2** and the transistor **TR3** are ON.

(Embodiment 4)

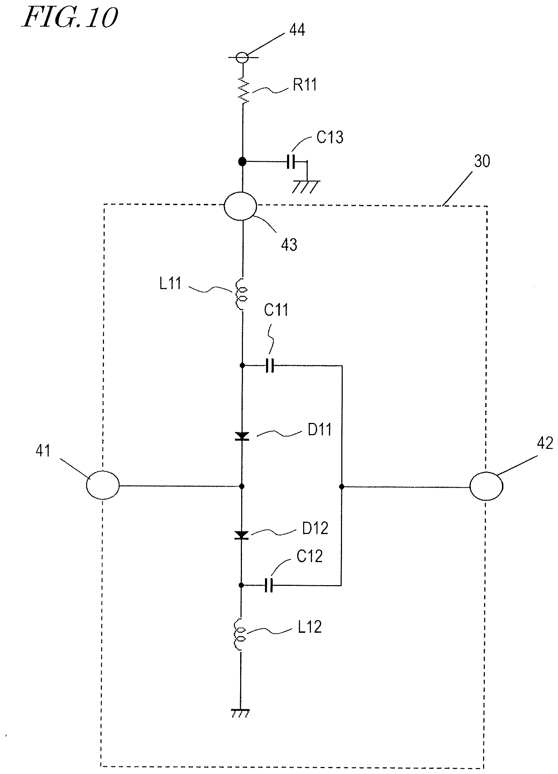

Next, a high frequency switch according to Embodiment 4 of the present invention will be described. FIG. **10** is a diagram showing a high frequency switch **30** according to Embodiment 4.

The high frequency switch **30** shown in FIG. **10** includes inductors **L11** and **L12,** diodes **D11** and **D12,** and capacitors **C11** and **C12.** The high frequency switch **30** includes a first connection end **41,** a second connection end **42,** a bias current end **43** at which a bias current is flown, a bias power terminal **44,** a resistor **R11** for limiting the bias current, and a capacitor **C13** whose constant is set so as to present low impedance with respect to a high frequency signal which is input to the first and second connection ends. The inductors **L11** and **L12** are bias elements for flowing a DC bias current through the diodes **D11** and **D12** via the bias current end **43.**

Hereinafter, with reference to FIG. **10,** operations of the high frequency switch **30** according to the embodiment of the present invention will be described. First, an operation in which the high frequency switch **30** is in a conducting state will be described. In a conducting state, the bias power terminal 44 is controlled to 3 V, for example. Power control for the bias power terminal **44** can be achieved by a microcomputer (not shown), for example.

When the bias power terminal **44** reaches 3 V, a DC bias current flows to the bias current end **43** via the resistor **R11.** Then, the DC bias current flows through the diode **D11** and the diode **D12** via the inductors **L11** and **L12** as bias elements. Then, a conducting state is established between the anode and the cathode of the diode **D11.** Similarly, a conducting state is also established between the anode and the cathode of the diode **D12.** As a result, the first connection end **41** and the second connection end **42** become connected via the capacitors **C11** and **C12.**

Now, the impedances of the inductors **L11** and **L12** are set to a value which is sufficiently greater than the impedance that is coupled to the first connection end **41** and the second connection end **42** given a high frequency signal with which the high frequency switch **30** is used as a high frequency switch. For example, when the high frequency signal has a frequency of 169 MHz, and the impedance coupled to the first connection end **41** and the second connection end **42** is 50 $\Omega$, the inductors **L11** and **L12** may each be set to 1 $\mu$H, whereby the impedances of the inductor **L11, L12** are set to a large value which is 20 times as large as 50 $\Omega$ or greater.

The capacitors **C11** and **C12** are set so as to present an impedance which is are sufficiently small relative to the impedances which are coupled to the first connection end **41** and the second connection end **42** given the aforementioned high frequency signal. For example, assuming a transmission frequency of 169 MHz, the capacitors **C11** and **C12** may be set to 1000 pF, whereby the capacitors **C11** and **C12** will present an impedance of 0.94 $\Omega$, which is a much smaller value than 50 $\Omega$.

When the voltage on the first connection end **41** increases, the diode D12 becomes more forward biased, whereby the current flowing through the diode **D12** increases; on the other hand, the diode **D11** operates in the reverse bias direction. Next, when the voltage on the first connection end **41** decreases, the diode **D11** becomes more forward biased, whereby the current flowing through the diode **D11** increases; on the other hand, the diode **D12** operates in the reverse bias direction. A diode exhibits a storing effect phenomenon, such that a current which has flowed under forward bias is stored in the diode, this stored charge causing a current to flow even under reverse bias. In other words, when periodic forward bias states occur, the diode will operate as if a capacitor. Then, the current flowing through the diode **D11** will flow to the second connection end **42** via the capacitor **C11**, and the current flowing through the diode **D12** will flow to the second connection end **42** via the capacitor **C12,** such that the first connection end **41** and the second connection end **42** have two capacitors connected thereto in parallel.

However, the current which the storing effect allows to flow is limited, and less current will flow based on the storing effect under reverse bias than the current which flows when the diode **D11** or **D12** are forward biased. Therefore, each diode **D11, D12** individually does not function as a perfect capacitor; rather, with respect to each diode, the current size will vary depending on the direction of flow. This means that each individual diode suffers from distortion. However, when the voltage on the first connection end **41** increases so that the diode **D12** is biased in the forward direction, the diode **D11** will be biased in the reverse direction; and when the voltage on the first connection end **41** decreases so that the diode **D11** is biased in the forward direction, the diode **D12** will be biased in the reverse direction. Therefore, whether the voltage on the first connection end **41** increases or decreases, one of the diodes will always be biased in the forward direction, and the other diode in the reverse direction, so that the total current remains the same irrespective of whether the voltage on the first connection end **41** has increased or decreased. In other words, the distortions occurring in the respective diodes **D11** and **D12** are cancelled out, thus meaning no distortion having occurred.

In order to effectively cancel out the aforementioned distortions occurring in the diodes **D11** and **D12,** it is desirable that diodes with identical characteristics be used for the diodes **D11** and **D12;** that identical characteristics and identical capacitance values be used for the capacitors **C11** and **C12;** and that identical characteristics and identical inductor values be used for the inductors **L11** and **L12.**

While the inductors **L11** and **L12** are used herein as bias elements, resistors may instead be used as the bias elements. However, in order to flow a predetermined DC bias current through the diodes **D11** and **D12,** the resistance values of the bias elements cannot be large. Hence, in the case where the impedances of the bias elements cannot be made sufficiently large relative to the impedances which are coupled to the first connection end **41** and the second connection end **42,** a propagation loss will occur in the high frequency switch **30.** Accordingly, in order to reduce the propagation loss, it is desirable to use inductors as the bias elements.

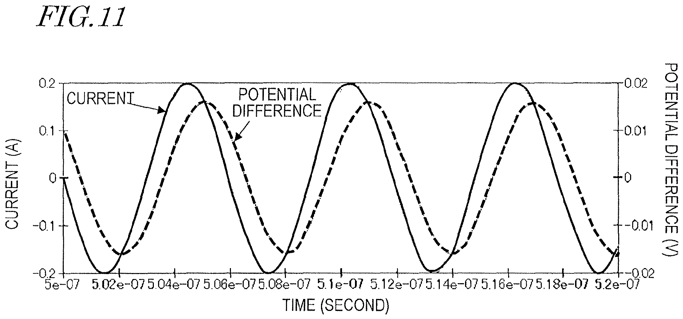

FIG. **11** shows simulation results of temporal change in the potential difference between the first connection end **41** and the second connection end **42** and the current flowing at the second connection end **42** when a high frequency signal of 169 MHz is input at the first connection end **41.** In this example, a simulation was conducted by adopting PIN diodes of the product number RN242CS as the diodes **D11** and **D12** and adopting a value as large as 0.01 uF for the capacitors **C11** and **C12** in order to reduce the influence of capacitor impedances. The horizontal axis is the time axis. As shown in FIG. **11,** the potential difference between the first connection end **41** and the second connection end **42** and the current flowing at the second connection end **42** are positive-negative symmetric, indicating that the distortions are cancelled out. Moreover, the potential difference and the current are essentially orthogonal. Therefore, the high frequency switch **30** hardly suffers from any power loss.

As described above, by using the high frequency switch **30** according to the embodiment of the present invention, it is possible to eliminate a spurious emission which would occur due to a difference between currents flowing under forward bias and under reverse bias in conventional constructions. Furthermore, by using the two diodes, i.e., the diode **D11** and the diode **D12,** the current flowing per diode can be halved, thus providing an effect in that diodes with a small current-carrying capacity can be used. Furthermore, since an increased capacitor function is introduced by the totality of the diode **D11** and the diode **D12,** losses can be reduced, thus providing an effect in that a high frequency switch with little loss can be realized, and that a longer battery life can be introduced in a battery-driven transmission/reception device.

Next, an operation in which the high frequency switch 30 is in a non-conducting state will be described. In a non-conducting state, the bias power terminal **44** is controlled to 0 V. Power control for the bias power terminal **44** can be achieved by a microcomputer (not shown), for example. At this time, the DC bias current does not flow to the bias current end **43,** and the DC bias current does not flow through the diode **D11** and the diode **D12.** Therefore, the diode **D11** and the diode **D12** are reverse biased, so that no current flows through the diode **D11** and the diode **D12** regardless of whether the voltage on the first connection end **41** or the second connection end **42** increases or decreases. In other words, a non-conducting state is established between the first connection end **41** and the second connection end **42.**

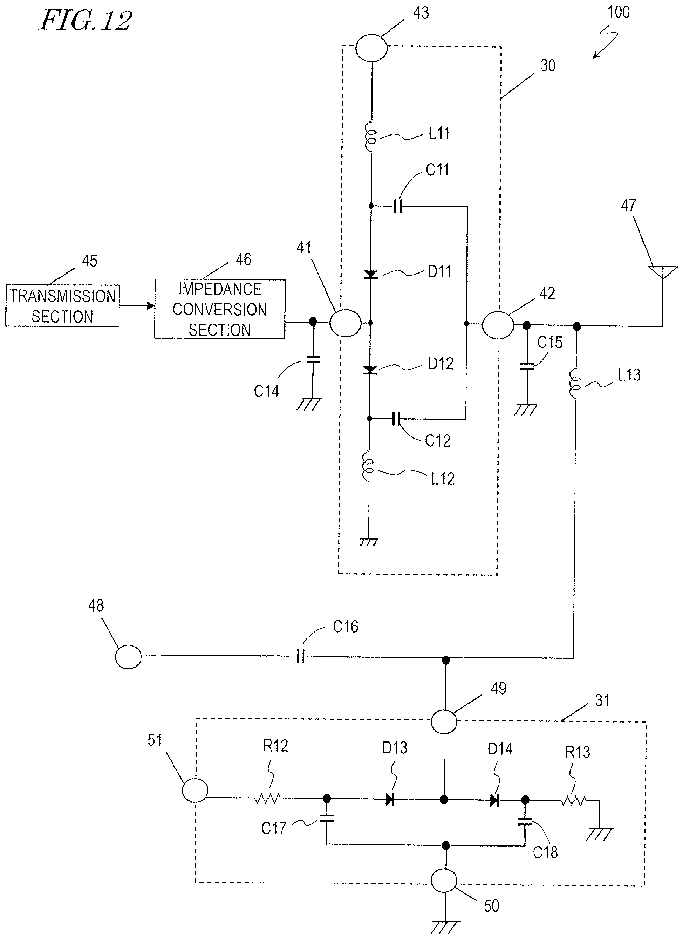

FIG. **12** is a diagram showing a first example of employing the high frequency switch **30** according to an embodiment of the present invention in a transmission/reception switching device **100.** First, an operation during transmission will be described with reference to FIG. **12.** A high frequency signal for transmission is output from the transmission section **45.** The high frequency signal is a signal of 169 MHz, for example.

The impedance conversion section **46** applies an impedance conversion to the output impedance of the transmission section **45** so as to match the antenna impedance. Then, the aforementioned 169 MHz after the impedance conversion is input to the connection end **41** of the high frequency switch **30**. The function of a capacitor **C14** will be described later. The high frequency switch **30** is the high frequency switch described in FIG. **10,** in which a DC bias current flows to the bias current end **43** for realizing a conducting state. Therefore, a conducting state is established between the connection end **41** and the connection end **42,** and the aforementioned 169 MHz signal is output to the connection end **42.**

A capacitor **C15** is being inserted in order to eliminate the influence of the inductor **L11** and the inductor **L12**. An inductance which is determined by the inductor **L11** and the inductor **L12** is created between the second connection end **42** and GND. The capacitor **C15** is a capacitor for cancelling out the aforementioned inductance, such that a parallel resonant circuit is constituted by the inductors **L11** and **L12** and the capacitor **C15**. The value of the capacitor **C15** is determined so that the resonant frequency equals the transmission frequency, i.e., 169 MHz. This allows the value of the inductors **L11** and **L12** to be smaller than that described with respect to FIG. **10**. Assuming that the inductors **L11** and **L12** are each 100 nH, the inductance between the second connection end **42** and GND is 50 nH, thus resulting in an impedance of 53 Ω at 169 MHz. This 53 Ω is an influential value against the antenna impedance of 50 Ω, and as such will deteriorate the transmission output power. However, by ensuring that the impedance of the capacitor **C15** becomes -53 Ω at 169 MHz, it is possible to cancel out the 53 Ω impedance associated with the aforementioned inductance, thus allowing the impedance between the second connection end **42** and GND to be increased. Furthermore, the parallel resonant circuit of the capacitor **C15** and the inductors **L11** and **L12** also functions as a band-pass filter with a center frequency of 169 MHz, providing an effect of eliminating any spurious signal other than 169 MHz. Thus, inserting the capacitor **C15** allows the value of the inductors **L11** and **L12** to be decreased, and allows to eliminate spurious signals.

As the capacitors **C11** and **C12,** a large value such as 1000 pF is desirable so that the impedances of the capacitors **C11** and **C12** will be sufficiently small at 169 MHz, in order not to affect the 50 Ω antenna impedance that is coupled to the second connection end **42**; however, a small value such as 100 pF can also be used. In the case where a small value such as 100 pF is used, although not illustrated in FIG. **12,** an inductor may be inserted between the second connection end **42** and the node of the capacitor **C15** for cancelling out the parallel impedance of the capacitors **C11** and **C12**.

The 169 MHz transmission signal occurring at the second connection end **42** is input to the connection end **49** of a second high frequency switch **31,** via the inductor **L13**. The second high frequency switch **31** differs from the high frequency switch **30** shown in FIG. **10** in that, while the high frequency switch **30** employs the inductors **L11** and **L12** as bias elements, the second high frequency switch **31** employs resistors **R12** and **R13** as bias elements. Except for the different bias elements, the operation of the high frequency switch **31** is identical to that of the high frequency switch **30**. A bias current flows to the bias current end **51** of the second high frequency switch **31,** thus placing the second high frequency switch **31** in a conducting state. Therefore, a conducting state exists between the connection end **49** and the connection end **50,** thus allowing the connection end **49** to be connected to GND. Since the connection end **49** is connected to GND in a conducting state, the values of the bias elements **R12** and **R13** will not affect the conducting state. Therefore, in the high frequency switch **31,** it is not necessary to use inductors as the bias elements, and resistors with values that allow a DC bias current to flow will suffice.

The capacitor **C14** is inserted in order to eliminate the influence of the inductor **L13,** which is connected to GND via the high frequency switch **31**. The capacitor **C14** and the inductor **L13** constitute a parallel resonant circuit, and the value of the capacitor **C14** is set so that the resonant frequency equals the transmission signal frequency, i.e., 169 MHz. Therefore, no decrease in impedance due to the inductor **L13** connected to the second connection end **42,** and the 169 MHz transmission signal occurring at the second connection end **42** will be emitted from the antenna **47** without decaying. Note that the parallel resonant circuit of the capacitor **C14** and the inductor **L13** also functions as a band-pass filter with a center frequency of 169 MHz, providing an effect of attenuating spurious signals.

Next, an operation during reception will be described. During reception, control is performed so that no bias current flows to the bias current end **43** of the high frequency switch **30** and to the bias current end **51** of the second high frequency switch **31**. Therefore, as has been described with reference to FIG. **10,** the high frequency switch **30** and the second high frequency switch **31** are in a non-conducting state. The input impedance of the high frequency switch **30** at the second connection end **42** is an inductance which is determined by the inductors **L11** and **L12**. This inductance is canceled out by the capacitor **C15** as has already been described. This is equivalent to the high frequency switch **30** and the capacitor **C15** not being connected to the antenna **47**. Then, the 169 MHz reception signal received at the antenna **47** is output to the reception end **8** via the inductor **L13** and the capacitor **C16**. Since the high frequency switch **31** is non-conducting, this is equivalent to the connection end **49** being open. The inductor **L13** and the capacitor **C16** constitute a series resonant circuit. The resonant frequency of this series resonant circuit is 169 MHz, which is the reception signal frequency. Through the above operation, the 169 MHz reception signal received at the antenna **47** propagates to the reception end **8** without decaying.

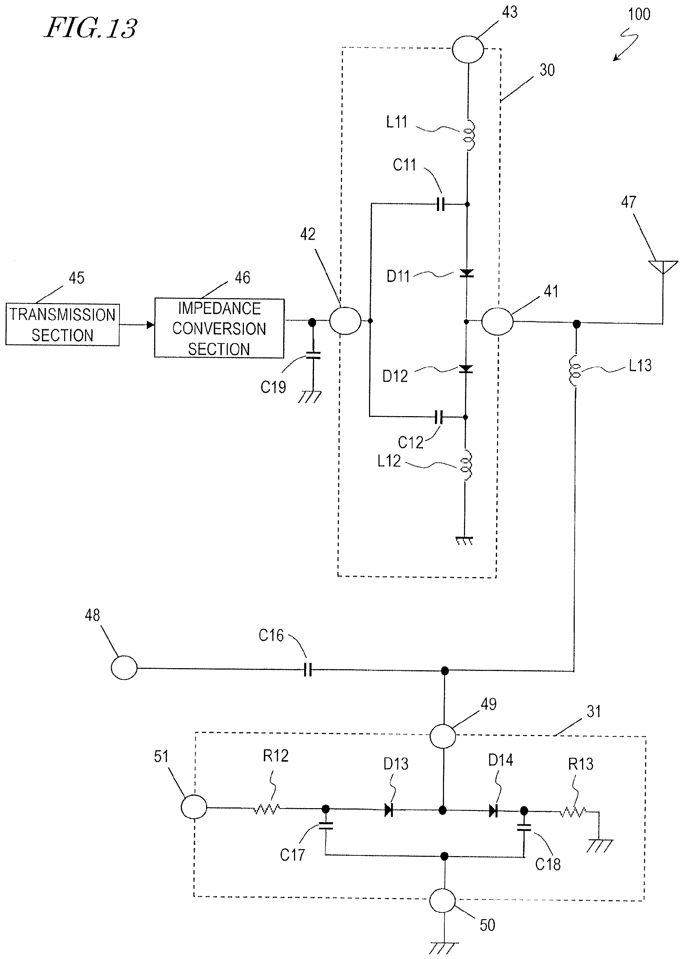

FIG. **13** is a diagram showing a second example in which the high frequency switches according to an embodiment of the present invention are used in a transmission/reception switching device **100**. FIG. **13** differs from the first example of FIG. **12** in that: the first connection end **41** of the high frequency switch **30** is connected to the antenna **47**;

the second connection end **42** is connected to the impedance conversion section **46;** there is no capacitor **C15;** and a capacitor **C19** is used instead of the capacitor **C14.**

First, an operation during transmission will be described with reference to FIG. **13.** During transmission, similarly to FIG. **12,** the high frequency switch **30** and the high frequency switch **31** are controlled to be in a conducting state. The impedance between the first connection end **41** or second connection end **42** and GND is an inductance which is determined by the inductors **L11** and **L12.** Furthermore, the inductor **L13** is connected to GND via the second high frequency switch **31,** this meaning that the inductance of the inductor **L13** is connected in parallel to the aforementioned inductance. Then, the capacitor **C19** is inserted in order to cancel out a parallel inductance of the inductance determined by the inductors **L11** and **L12** and the inductance of the inductor **L13.** In other words, the parallel inductance and the capacitor **C19** constitute a parallel resonant circuit whose resonant frequency is the transmission frequency, i.e., 169 MHz. In other words, during transmission, the capacitor **C19** in FIG. **13** is what the capacitors **C14** and **C15** are in FIG. **12.** Through the above operation, the transmission output power of the impedance conversion section **46** can be emitted from the antenna **47** without decaying.

Next, an operation during reception of the second example of FIG. **13** will be described. During reception, similarly to the first example of FIG. **12,** the high frequency switch **30** and the high frequency switch **31** are controlled to be in a non-conducting state. This is equivalent to the high frequency switch **30** not being connected to the antenna **47,** and equivalent to the second high frequency switch **31** not being connected to the inductor **L13** and the capacitor **C16.** Of course, this is also equivalent to the capacitor **C19** not being connected to the antenna **47,** so that the capacitor **C19** does not affect the reception operation. Thus, the 169 MHz reception signal received at the antenna **47** propagates to the reception end **8** via the inductor **L13** and the capacitor **C16,** without decaying. The inductor **L13** and the capacitor **C16** constitute a series resonant circuit whose resonant frequency is the reception frequency, i.e., 169 MHz.

As described above, according to the second example illustrated in FIG. **13,** two capacitors **C14** and **C15** can be replaced by one capacitor **C19,** thus being able to reduce the number of parts.

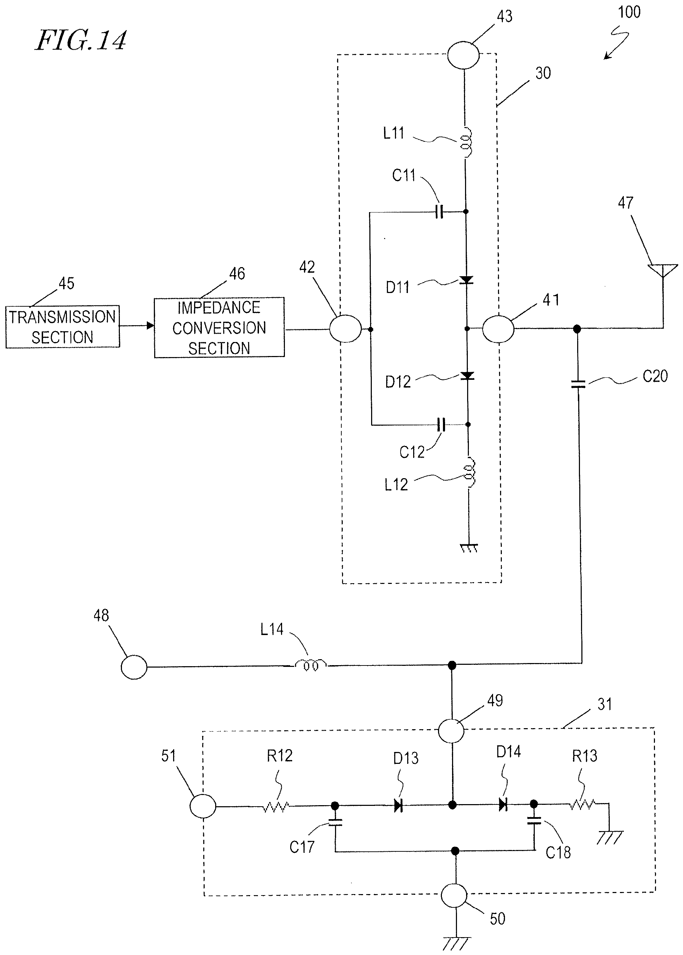

FIG. **14** is a diagram showing a third example in which the high frequency switches according to an embodiment of the present invention are used in a transmission/reception switching device **100.** The third example of FIG. **14** differs from the second example of FIG. **13** in that: there is no capacitor **C19;** a capacitor **C20** is used instead of the inductor **L13;** and an inductor **L14** is used instead of the capacitor **C16.**

First, an operation during transmission will be described with reference to FIG. **14.** During transmission, similarly to FIG. **13,** the high frequency switch **30** and the high frequency switch **31** are controlled to be in a conducting state. The impedance between the first connection end **41** or second connection end **42** and GND is an inductance which is determined by the inductors **L11** and **L12.** The capacitor **C20** is connected to GND via the second high frequency switch **31.** The inductance and the capacitor **C20** constitute a parallel resonant circuit whose resonant frequency is the transmission frequency, i.e., 169 MHz. Through the above operation, the transmission output power of the impedance conversion section **46** can be emitted from the antenna **47** without decaying.

Next, an operation during reception of the third example of FIG. **14** will be described. During reception, similarly to the second example of FIG. **13,** the high frequency switch **30** and the high frequency switch **31** are controlled to be in a non-conducting state. This is equivalent to the high frequency switch **30** not being connected to the antenna **47,** and equivalent to the second high frequency switch **31** not being connected to the inductor **L14** and the capacitor **C20.** Thus, the 169 MHz reception signal received at the antenna **47** propagates to the reception end **8** via the capacitor **C20** and the inductor **L14** without decaying. The inductor **L14** and the capacitor **C20** constitute a series resonant circuit whose resonant frequency is the reception frequency, i.e., 169 MHz.

As described above, adopting the third example of FIG. **14** provides effects in that the capacitor **C19** can be eliminated, and that a further reduction in the number of parts is enabled.

Although the transmission/reception switching devices and high frequency switches are applied to wireless devices in the description of the above embodiments, the present invention is not to be limited to wireless communications. The present invention is applicable to any circuit which transmits and receives a high frequency signal, and may also be applied to a wired communications device.

[INDUSTRIAL APPLICABILITY]

The transmission/reception switching device according to the present invention is useful for battery-driven communications devices which require a high efficiency during transmission for an extended battery life. As an example, it is applicable to wireless devices for the automated meter reading of gas meters or the like. In particular, a wireless device for use with a gas meter is battery-driven, and is required to operate for ten or more years without battery exchange, for which the transmission/reception switching device according to the present invention is useful.

Moreover, the high frequency switch according to the present invention realizes a switch with little distortion, and can reduce harmonic spurious emission from the high frequency switch. Therefore, it is useful to employ the high frequency switch according to the present invention for a transmission/reception switching device in which harmonic spurious emission would be a problem. Furthermore, it is useful for battery-driven communications devices which require a high efficiency during transmission for an extended battery life, because of being able to realize a high frequency switch with little loss. As an example, it is applicable to wireless devices for the automated meter reading of gas meters or the like. In particular, a wireless device for use with a gas meter is battery-driven, and is required to operate for ten or more years without battery exchange, for which the transmission/reception switching device according to the present invention is useful.

[REFERENCE SIGNS LIST]

| 1 | transmission section |
| 2 | first reactance |
| 3 | high frequency switch |
| 4 | second reactance |
| 5 | reception terminal |
| 6 | impedance conversion section |
| 13, 23 | power terminal |
| 16 | node |
| 17 | antenna |
| 20 | first impedance conversion section |
| 24 | second impedance conversion section |
| 30, 31 | high frequency switch |
| 41, 42, 49, 50 | connection end |
| 43, 51 | bias current end |
| D11, D12 | diode |
| L11, L12, L13, L14 | inductor |
| C11, C12, C13, C14, C15, C16, C19, C20 | capacitor |

**Claims**

1. A transmission/reception switching device comprising:

    a first reactance (2) including a first inductor (8) and a first capacitor (7), the first reactance (2) being connected between an antenna (17) and a transmission section (1) which outputs a signal; and
    a high frequency switch (3) connected to either an output end of the first inductor (8) or an output end of the first capacitor (7) at a predetermined node (16),
    **characterized by**
    a second reactance (4) including a second inductor (15) and a second capacitor (14), the second reactance (4) being connected between the predetermined node (16) and a reception terminal (5), wherein
    the first inductor (8) and the first capacitor (7) are connected in parallel,
    the second reactance (4) is connected to the antenna (17) through either the first inductor (8) or the first capacitor (7), and
    constants of the second inductor (15) and the second capacitor (14) have values for establishing matching under influence of a mismatch caused by the first reactance (2) during signal reception.

2. The transmission/reception switching device of claim 1, wherein the constants of the second inductor (15) and the second capacitor (14) have values for cancelling out a reactance component of the first reactance (2) during signal reception.

3. The transmission/reception switching device of claim 1 or 2, wherein the first reactance (2) further includes an impedance conversion section (6) for converting an output impedance of the transmission section (1) into a first impedance, and further converting the first impedance into a second impedance.

4. The transmission/reception switching device of any of claims 1 to 3, wherein,
    the high frequency switch (3) includes a semiconductor switch having one end connected directly or via a reactance element to GND and another end connected to the output end of one of the first inductor (8) and the first capacitor (7) at the predetermined node (16); and

the high frequency switch (3) is configured to switch ON during transmission in which the signal output from the transmission section (1) is transmitted from the antenna (17), and to switch OFF during reception in which a signal received at the antenna (17) is output to the reception terminal.

5. The transmission/reception switching device of any of claims 1 to 4, wherein
the high frequency switch (3) includes a first semiconductor switch and a second semiconductor switch;
one end of the first semiconductor switch and one end of the second semiconductor switch are connected in series at the predetermined node (16); and
another end of the first semiconductor switch and another end of the second semiconductor switch are each connected to GND directly or via a reactance element.

6. The transmission/reception switching device of claim 5, wherein,
the other end of the first semiconductor switch is connected to a power terminal; and
the high frequency switch (3) is configured to switch ON when a plus voltage is applied to the power terminal during transmission in which the signal output from the transmission section (1) is transmitted from the antenna (17), and to switch OFF when zero voltage is applied to the power terminal during reception in which a signal received at the antenna (17) is output to the reception terminal.

7. The transmission/reception switching device of claim 6, wherein,
a cathode of a first diode being the first semiconductor switch and an anode of a second diode being the second semiconductor switch are connected in series at the predetermined node (16);
an anode of the first diode and a cathode of the second diode are each connected to GND directly or via the reactance element;
the anode of the first diode is connected to the power terminal; and
the high frequency switch (3) is configured to switch ON when a plus voltage is applied to the power terminal in order to flow a forward current through the first diode and the second diode during the transmission, and to switch OFF when zero voltage is applied to the power terminal in order not to flow a forward current through the first diode and the second diode during the reception.

8. The transmission/reception switching device of claim 5 or 6, wherein,
a drain of a P-MOSFET being the first semiconductor switch and a drain of an N-MOSFET being the second semiconductor switch are connected in series at the predetermined node (16);
a source of the P-MOSFET and a source of the N-MOSFET are each connected to GND directly or via the reactance element; and
the high frequency switch (3) is configured to switch ON by allowing the P-MOSFET to conduct between the drain and the source and allowing the N-MOSFET to conduct between the drain and the source during transmission in which the signal output from the transmission section (1) is transmitted from the antenna (17), and to switch OFF by not allowing the P-MOSFET to conduct between the drain and the source, and not allowing the N-MOSFET to conduct between the drain and the source during reception in which a signal received at the antenna (17) is output to the reception terminal.

9. The transmission/reception switching device of claim 5 or 6, wherein,
a collector of a PNP transistor being the first semiconductor switch and a collector of an NPN transistor being the second semiconductor switch are connected in series at the predetermined node (16);
an emitter of the PNP transistor and an emitter of the NPN transistor are each connected to GND via the reactance element; and
the high frequency switch (3) is configured to switch ON by flowing a base current through each of a base of the PNP transistor and a base of the NPN transistor during transmission in which the signal output from the transmission section (1) is transmitted from the antenna (17), and to switch OFF by not flowing a base current through each of the base of the PNP transistor and the base of the NPN transistor during reception in which a signal received at the antenna (17) is output to the reception terminal.

10. The transmission/reception switching device of any of claims 1 to 9, wherein the high frequency switch (3) comprises:

a first diode and a second diode; and
a plurality of bias elements for flowing a bias current through the first diode and the second diode, the plurality of bias elements being respectively connected to an anode of the first diode and a cathode of the second diode, wherein, when the bias current is flowed, a state of conducting is established between a first connection end and a second connection end, the first connection end being a node between a cathode of the first diode and an anode of the second diode, and the second connection end being a node at which the anode of the first diode and the cathode of the second diode are connected via a plurality of DC cutting elements.

11. The transmission/reception switching device of claim 10, wherein the plurality of DC cutting elements are at least two capacitors connected in series with each other; and the second connection end is a node between the at least two capacitors.

12. The transmission/reception switching device of claim 10 or 11, wherein the plurality of bias elements are inductors, the inductors also composing a filter for a high frequency signal to pass through the first connection end and the second connection end.

**Patentansprüche**

1. Sende/Empfangs-Umschaltvorrichtung, mit:

einer ersten Reaktanz (2) mit einer ersten Induktivität (8) und einem ersten Kondensator (7), wobei die erste Reaktanz (2) zwischen einer Antenne (17) und einem Sendeabschnitt (1), der ein Signal ausgibt, angeschlossen ist; und
einem Hochfrequenzschalter (3), der mit einem Ausgangsende der ersten Induktivität (8) oder einem Ausgangsende des ersten Kondensators (7) an einem vorbestimmten Knoten (16) verbunden ist,
**gekennzeichnet durch**
eine zweite Reaktanz (4) mit einer zweiten Induktivität (15) und einem zweiten Kondensator (14), wobei die zweite Reaktanz (4) zwischen dem vorbestimmten Knoten (16) und einem Empfangsanschluss (5) angeschlossen ist, wobei
die erste Induktivität (8) und der erste Kondensator (7) parallel geschaltet sind,
die zweite Reaktanz (4) über die erste Induktivität (8) oder den ersten Kondensator (7) mit der Antenne (17) verbunden ist, und
Konstanten der zweiten Induktivität (15) und des zweiten Kondensators (14) Werte derart haben, dass eine Anpassung unter Einfluss einer Fehlanpassung, die durch die erste Reaktanz (2) während des Signalempfangs hervorgerufen wird, erreicht wird.

2. Sende/Empfangs-Umschaltvorrichtung nach Anspruch 1, wobei die Konstanten der zweiten Induktivität (15) und des zweiten Kondensators (14) Werte haben, die eine Reaktanzkomponente der ersten Reaktanz (2) während des Signalempfangs auslöschen.

3. Sende/Empfangs-Umschaltvorrichtung nach Anspruch 1 oder 2, wobei die erste Reaktanz (2) ferner einen Impedanzumwandlungsabschnitt (6) zur Umwandlung einer Ausgangsimpetanz des Sendeabschnitts (1) in eine erste Impedanz und ferner zur Umwandlung der ersten Impedanz in eine zweite Impedanz aufweist.

4. Sende/Empfangs-Umschaltvorrichtung nach einem der Ansprüche 1 bis 3, wobei
der Hochfrequenzschalter (3) einen Halbleiterschalter aufweist, der mit einem Ende direkt oder über ein Reaktanzelement mit GND verbunden ist, und der mit einem weiteren Ende mit dem Ausgangsende der ersten Induktivität (8) oder des ersten Kondensators (7) an dem vorbestimmten Knoten (16) verbunden ist; und
der Hochfrequenzschalter (3) ausgebildet ist, während der Übertragung, in welcher das von dem Sendeabschnitt (1) ausgegebene Signal von der Antenne (17) gesendet wird, auf EIN zu schalten und während des Empfangs, bei welchem ein an der Antenne (17) empfangendes Signal an den Empfangsanschluss ausgegeben wird, auf AUS zu schalten.

5. Sende/Empfangs-Umschaltvorrichtung nach einem der Ansprüche 1 bis 4, wobei
der Hochfrequenzschalter (3) einen ersten Halbleiterschalter und einen zweiten Halbleiterschalter umfasst;
ein Ende des ersten Halbleiterschalters und ein Ende des zweiten Halbleiterschalters an dem vorbestimmten Knoten (16) in Reihe geschaltet sind; und
ein weiteres Ende des ersten Halbleiterschalters und ein weiteres Ende des zweiten Halbleiterschalters jeweils direkt oder über ein Reaktanzelement mit GND verbunden sind.

**6.** Sende/Empfangs-Umschaltvorrichtung nach Anspruch 5, wobei
das andere Ende des ersten Halbleiterschalters mit einem Leistungsanschluss verbunden ist; und
der Hochfrequenzschalter (3) ausgebildet ist, auf EIN zu schalten, wenn eine positive Spannung während der Übertragung, in der das von dem Sendeabschnitt (1) ausgegebene Signal von der Antenne (17) gesendet wird, an dem Leistungsanschluss anliegt, und auf AUS zu schalten, wenn eine Spannung Null während des Empfangs, in welchem ein an der Antenne (17) empfangendes Signal an den Empfangsanschluss ausgegeben wird, an dem Leistungsanschluss anliegt.

**7.** Sende/Empfangs-Umschaltvorrichtung nach Anspruch 6, wobei
eine Kathode einer ersten Diode, die der erste Halbleiterschalter ist, und eine Anode einer zweiten Diode, die der zweite Halbleiterschalter ist, an dem vorbestimmten Knoten (16) in Reihe geschaltet sind;
eine Anode der ersten Diode und eine Kathode der zweiten Diode jeweils direkt oder über das Reaktanzelement mit GND verbunden sind;
die Anode der ersten Diode mit dem Leistungsanschluss verbunden ist; und
der Hochfrequenzschalter (3) ausgebildet ist, auf EIN zu schalten, wenn eine positive Spannung an dem Leistungsanschluss anliegt, um einen Vorwärtsstrom durch die erste Diode und die zweite Diode während der Übertragung fließen zu lassen, und auf AUS zu schalten, wenn die Spannung Null an dem Leistungsanschluss anliegt, um einen Vorwärtsstrom durch die erste Diode und die zweite Diode während des Empfangs fließen zu lassen.

**8.** Sende/Empfangs-Umschaltvorrichtung nach Anspruch 5 oder 6, wobei
ein Drain eines P-MOSFET, der der erste Halbleiterschalter ist, und ein Drain eines N-MOSFET, der der zweite Halbleiterschalter ist, an dem vorbestimmten Knoten (16) in Reihe geschaltet sind;
ein Source des P-MOSFET und ein Source des N-MOSFET jeweils direkt oder über das Reaktanzelement mit GND verbunden sind; und
der Hochfrequenzschalter (3) ausgebildet ist, auf EIN zu schalten, indem der P-MOSFET zwischen dem Drain und dem Source und der N-MOSFET zwischen dem Drain und dem Source während der Übertragung, in welcher das von dem Sendeabschnitt (1) ausgegebene Signal von der Antenne (17) gesendet wird, leitend gemacht werden, und auf AUS zu schalten, indem der P-MOSFET zwischen dem Drain und dem Source und der N-MOSFET zwischen dem Drain und dem Source während des Empfangs, in welchem ein an der Antenne (17) empfangende Signal an den Empfangsanschluss ausgegeben wird, nicht leitend sind.

**9.** Sende/Empfangs-Umschaltvorrichtung nach Anspruch 5 oder 6, wobei
ein Kollektor eines PNP-Transistors, der der erste Halbleiterschalter ist, und ein Kollektor eines NPN-Transistors, der der zweite Halbleiterschalter ist, an dem vorbestimmten Knoten (16) in Reihe geschaltet sind;
ein Emitter des PNP-Transistors und ein Emitter des NPN-Transistors jeweils über das Reaktanzelement mit GND verbunden sind; und
der Hochfrequenzschalter (3) ausgebildet ist, auf EIN zu schalten, indem ein Basisstrom jeweils durch eine Basis des PNP-Transistors und eine Basis des NPN-Transistors während der Übertragung, in welcher das von dem Sendeabschnitt (19 ausgegebene Signal von der Antenne (17) gesendet wird, hervorgerufen wird, und auf AUS zu schalten, indem ein Basisstrom jeweils durch die Basis des PNP-Transistors und die Basis des NPN-Transistors während des Empfangs, bei welchem ein an der Antenne (17) empfangenes Signal an den Empfangsanschluss ausgegeben wird, nicht hervorgerufen wird.

**10.** Sende/Empfangs-Umschaltvorrichtung nach einem der Ansprüche 1 bis 9, wobei der Hochfrequenzschalter (3) aufweist:

eine erste Diode und eine zweite Diode; und
mehrere Vorspannelemente zum Erzeugen eines Vorspannungsstroms durch die erste Diode und die zweite Diode, wobei die mehreren Vorspannelemente jeweils mit einer Anode der ersten Diode und einer Kathode der zweiten Diode verbunden sind,
wobei, wenn der Vorspannungsstrom fließt, ein leitender Zustand zwischen einem ersten Verbindungsende und einem zweiten Verbindungsende hergestellt wird, wobei das erste Verbindungsende ein Knoten zwischen einer Kathode der ersten Diode und einer Anode der zweiten Diode ist, und wobei das zweite Verbindungsende ein Knoten ist, an welchem die Anode der ersten Diode und die Kathode der zweiten Diode über mehrere Gleichspannungsbegrenzungselemente verbunden sind.

**11.** Sende/Empfangs-Umschaltvorrichtung nach Anspruch 10, wobei die mehreren Gleichspannungsbegrenzungselemente mindestens zwei Kondensatoren sind, die in Reihe geschaltet sind; und wobei das zweite Verbindungsende ein Knoten zwischen den mindestens zwei Kondensatoren ist.

**12.** Sende/Empfangs-Umschaltvorrichtung nach Anspruch 10 oder 11, wobei die mehreren Vorspannelemente Induktivitäten sind und wobei die Induktivitäten ferner einen Filter aufweisen, der ausgebildet ist, ein Hochfrequenzsignal durch das erste Verbindungsende und das zweite Verbindungsende durchzulassen.

**Revendications**

**1.** Dispositif de commutation transmission/réception comprenant :

une première réactance (2) incluant un premier inducteur (8) et un premier condensateur (7), la première réactance (2) étant connectée entre une antenne (17) et une section de transmission (1) qui génère un signal ; et

un commutateur à haute fréquence (3) connecté soit à une extrémité de sortie du premier inducteur (8) soit à une extrémité de sortie du premier condensateur (7) au niveau d'un noeud prédéterminé (16), **caractérisé par**

une deuxième réactance (4) incluant un deuxième inducteur (15) et un deuxième condensateur (14), la deuxième réactance (4) étant connectée entre le noeud prédéterminé (16) et une borne de réception (5), dans lequel le premier inducteur (8) et le premier condensateur (7) sont connectés en parallèle,

la deuxième réactance (4) est connectée à l'antenne (17) via soit le première inducteur (8) soit le premier condensateur (7), et

des constantes du deuxième inducteur (15) et du deuxième condensateur (14) affichent des valeurs pour l'établissement d'une correspondance sous une influence d'une discordance engendrée par la première réactance (2) au cours d'une réception de signal.

**2.** Le dispositif de commutation transmission/réception de la revendication 1, dans lequel les constantes du deuxième inducteur (15) et du deuxième condensateur (14) affichent des valeurs pour une annulation d'une composante de réactance de la première réactance (2) au cours d'une réception de signal.

**3.** Le dispositif de commutation transmission/réception de la revendication 1 ou 2, dans lequel la première réactance (2) comprend en outre une section de conversion d'impédance (6) pour une conversion d'une impédance de sortie de la section de transmission (1) en une première impédance, et une conversion en outre de la première impédance en une deuxième impédance.

**4.** Le dispositif de commutation transmission/réception de l'une quelconque des revendications 1 à 3, dans lequel, le commutateur à haute fréquence (3) inclut un commutateur à semiconducteur présentant une extrémité connectée directement ou via un élément de réactance à GND et une autre extrémité connectée à l'extrémité de sortie d'un du premier inducteur (8) et du premier condensateur (7) au niveau du noeud prédéterminé (16) ; et

le commutateur à haute fréquence (3) est configuré pour basculer vers ON au cours d'une transmission dans laquelle la sortie de signal issue de la section de transmission (1) est transmise depuis l'antenne (17), et pour basculer vers OFF au cours d'une réception dans laquelle un signal reçu au niveau de l'antenne (17) est sorti vers la borne de réception.

**5.** Le dispositif de commutation transmission/réception de l'une quelconque des revendications 1 à 4, dans lequel le commutateur à haute fréquence (3) inclut un premier commutateur à semiconducteur et un deuxième commutateur à semiconducteur ;

une extrémité du premier commutateur à semiconducteur et une extrémité du deuxième commutateur à semiconducteur sont connectées en série au niveau du noeud prédéterminé (16) ; et

une autre extrémité du premier commutateur à semiconducteur et une autre extrémité du deuxième commutateur à semiconducteur sont chacune connectée à GND directement ou via un élément de réactance.

**6.** Le dispositif de commutation transmission/réception de la revendication 5, dans lequel, l'autre extrémité du premier commutateur à semiconducteur est connectée à une borne de puissance ; et le commutateur à haute fréquence (3) est configuré pour basculer vers ON lorsqu'une tension positive est appliquée à la borne de puissance au cours d'une transmission dans laquelle la sortie de signal issue de la section de transmission (1) est transmise depuis l'antenne (17), et pour basculer vers OFF lorsqu'une tension nulle est appliquée à la borne de puissance au cours d'une réception dans laquelle un signal reçu au niveau de l'antenne (17) est sorti vers la borne de réception.

7. Le dispositif de commutation transmission/réception de la revendication 6, dans lequel,
une cathode d'une première diode constituant le premier commutateur à semiconducteur et une anode d'une deuxième diode constituant le deuxième commutateur à semiconducteur sont connectées en série au niveau du noeud prédéterminé (16) ;
une anode de la première diode et une cathode de la deuxième diode sont chacune connectée à GND directement ou via l'élément de réactance ;
l'anode de la première diode est connectée à la borne de puissance ; et
le commutateur à haute fréquence (3) est configuré pour basculer vers ON lorsqu'une tension positive est appliquée à la borne de puissance en vue de faire circuler un courant direct à travers la première diode et la deuxième diode au cours de la transmission, et pour basculer vers OFF lorsqu'une tension nulle est appliquée à la borne de puissance en vue de ne pas faire circuler un courant direct à travers la première diode et la deuxième diode au cours de la réception.

8. Le dispositif de commutation transmission/réception de la revendication 5 ou 6, dans lequel,
un drain d'un MOSFET P constituant le premier commutateur à semiconducteur et un drain d'un MOSFET N constituant le deuxième commutateur à semiconducteur sont connectés en série au niveau du noeud prédéterminé (16) ;
Une source du MOSFET P et une source du MOSFET N sont chacune connectée à GND directement ou via l'élément de réactance ; et
le commutateur à haute fréquence (3) est configuré pour basculer vers ON en autorisant le MOSFET P à établir une conduction entre le drain et la source et en autorisant le MOSFET N à établir une conduction entre le drain et la source au cours d'une transmission dans laquelle la sortie de signal issue de la section de transmission (1) est transmise depuis l'antenne (17), et pour basculer vers OFF en n'autorisant pas le MOSFET P à établir une conduction entre le drain et la source, et en n'autorisant pas le MOSFET N à établir une conduction entre le drain et la source au cours d'une réception dans laquelle un signal reçu au niveau de l'antenne (17) est sorti vers la borne de réception.

9. Le dispositif de commutation transmission/réception de la revendication 5 ou 6, dans lequel,
un collecteur d'un transistor PNP constituant le premier commutateur à semiconducteur et un collecteur d'un transistor NPN constituant le deuxième commutateur à semiconducteur sont connectés en série au niveau du noeud prédéterminé (16) ;
un émetteur du transistor PNP et un émetteur du transistor NPN sont chacun connecté à GND via l'élément de réactance ; et
le commutateur à haute fréquence (3) est configuré pour basculer vers ON en laissant circuler un courant de base à travers chacune d'une base du transistor NPN et une base du transistor PNP au cours d'une transmission dans laquelle la sortie de signal issue de la section de transmission (1) est transmise depuis l'antenne (17), et pour basculer vers OFF en ne laissant pas circuler un courant de base à travers chacune de la base du transistor PNP et la base du transistor NPN au cours d'une réception dans laquelle un signal reçu au niveau de l'antenne (17) est sorti vers la borne de réception.

10. Le dispositif de commutation de transmission/réception de l'une quelconque des revendications 1 à 9, dans lequel le commutateur à haute fréquence (3) comprend :

une première diode et une deuxième diode ; et
une pluralité d'éléments de polarisation pour une circulation d'un courant de polarisation à travers la première diode et la deuxième diode, la pluralité d'éléments de polarisation étant respectivement connectée à une anode de la première diode et une cathode de la deuxième diode,
dans lequel, lorsque le courant de polarisation circule, un état de conduction est établi entre une première extrémité de connexion et une deuxième extrémité de connexion, la première extrémité de connexion constituant un noeud entre une cathode de la première diode et une anode de la deuxième diode, et la deuxième extrémité de connexion constituant un noeud auquel l'anode de la première diode et la cathode de la deuxième diode sont connectées via une pluralité d'éléments de coupure CC.

11. Le dispositif de commutation transmission/réception de la revendication 10, dans lequel la pluralité d'éléments de coupure CC correspond à au moins deux condensateurs connectés en série l'un à l'autre ; et
la deuxième extrémité de connexion est un noeud entre l'au moins deux condensateurs.

12. Le dispositif de commutation transmission/réception de la revendication 10 ou 11, dans lequel la pluralité d'éléments de polarisation sont des inducteurs, les inducteurs constituant également un filtre pour qu'un signal à haute fréquence traverse la première extrémité de connexion et la deuxième extrémité de connexion.

*FIG.1*

*FIG.2*

*FIG.3A*

*FIG.3B*

*FIG.3C*

*FIG.3D*

*FIG.3E*

*FIG.3F*

*FIG.3G*

*FIG.4*

## FIG.5

## FIG.6

*FIG.7*

*FIG.8*

*FIG.9*

*FIG.10*

*FIG.11*

*FIG.12*

*FIG.13*

*FIG.14*

*FIG.15*

**EP 2 816 733 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002064400 A

- US 5054114 A